# EUROPEAN PATENT APPLICATION

(11) **EP 2 194 509 A1**
(43) Date of publication of application: **09.06.2010**
(21) Application number: 10154578.8
(22) Date of filing: 07.05.2007
(51) Int. Cl.: G06T 15/70

(54) **Method for providing affective characteristics to computer generated avatar during gameplay**

(30) Priority: 07.05.2006 US 746640 P; 08.05.2006 US 746773 P; 08.05.2006 US 746777 P
(62) Divisional of application: 07776884.4
(71) Applicant: Sony Computer Entertainment Inc., Tokyo 107-0062 (JP)
(72) Inventor: Marks, Richard, Foster City, CA 94404-2175 (US); Zalewski, Gary, Foster City, CA 94404-2175 (US)
(74) Representative: Turner, James Arthur

(57) **Abstract**

Embodiments are described for improving and enhancing verbal and non-verbal communications during or in conjunction with game play. The system improves and enhances verbal and non-verbal communication by modifying avatars representing real-world players based on real-world reactions to gameplay events. The effect can take on many formes, such as video pixel patches that can be integrated into specific portions of an avatar. The video pixel patches are preferably applied in such a way that they integrate into the moving video frames, and therefore, the integration appears to be substantially done in real-time.

## Description

### BACKGROUND

The video game industry has seen many changes over the years. As computing power has expanded, developers of video games have likewise created game software that takes advantage of these increases in computing power. To this end, video game developers have been coding games that incorporate sophisticated operations and mathematics to produce a very realistic game experience.

Example gaming platforms include the Sony Playstation or Sony Playstation2 (PS2), each of which is sold in the form of a game console. As is well known, the game console is designed to connect to a monitor (usually a television) and enable user interaction through handheld controllers. The game console is designed with specialized processing hardware, including a CPU, a graphics synthesizer for processing intensive graphics operations, a vector unit for performing geometry transformations, and other glue hardware, firmware, and software. The game console is further designed with an optical disc tray for receiving game compact discs for local play through the game console. Online gaming is also possible, wherein a user can interactively play against or with other users over the Internet.

As game complexity continues to intrigue players, gaming software and hardware manufacturers have continued to innovate to enable additional interactivity. In reality, however, the way in which users interact with a game has not changed dramatically over the years. Commonly, users still play computer games using hand held controllers or interact with programs using mouse pointing devices.

In view of the foregoing, there is a need for methods and systems that enable more advanced user interactivity with game play.

### SUMMARY

An invention is described for improving and enhancing verbal and non-verbal communications. The system improves and enhances verbal and non-verbal communication by modifying avatars representing real-world players based on real-world reactions to gameplay events. The effect can take on many forms, such as video pixel patches that can be integrated into specific portions of an avatar. The video pixel patches are preferably applied in such a way that they integrate into the moving video frames, and therefore, the integration appears to be substantially done in real-time.

In one embodiment, a computer implemented method for modifying an avatar in response to user reaction to gameplay events is disclosed. The avatar representing either or both of a first user and a second user, while the gameplay events result from execution of a computer program and user input to a computer system executing at least part of the computer program. The method is initiated by executing game play and monitoring reactions of one or both of the first and second users. The method continues by displaying an avatar representation of one or both of the first and second users along side of a game play display area. In another operation the method modifies reactions of the avatar representation of one or both of the first and second users in response to the monitored reactions of the first and second users during the execution of game play.

In another embodiment, a computer implemented method for modifying an avatar in response to user reaction to gameplay events is disclosed. The avatar representing either or both of a first user and a second user while the gameplay events results from execution of a computer program and user input to a computer system executing at least part of the computer program. The method is begins by executing game play and monitoring reactions of one or both of the first and second users. In another operation, the method displays an avatar representation of one or both of the first and second users along side of a game play display area. The method continues by modifying reactions of the avatar representation of one or both of the first and second users in response to the monitored reactions of the first and second users during the execution of game play. Furthermore, the avatar representation at least partially modified automatically in response to gameplay events, and when modified automatically, the modification of the avatar representation does not fully match the monitored reaction of the first or second user.

In yet another embodiment, a computer implemented method for automatically modifying an avatar in response to gameplay events is disclosed. The avatar representing a first user, the gameplay events resulting from execution of a computer program and user input to a computer system executing at least part of the computer program. The method begins by monitoring gameplay events to identify actions occurring during gameplay. In another operation, the method modifies a graphical image of the avatar representing the first user in response to identified actions occurring during gameplay to visually convey a response to the gameplay actions. In yet another operation, the method displays to a second user the modified graphical image of the avatar representing the first user, wherein the modified avatar representing the first user allows the second user to understand gameplay actions that have occurred to the first user.

In another embodiment, computer readable media having program instructions for modifying an avatar in response to user reaction to gameplay events is disclosed. The avatar representing either or both of a first user and a second user and the gameplay events resulting from execution of a computer program and user input to a computer system executing at least part of the computer program. The media program instructions for executing game play having program instructions for monitoring reactions of one or both of the first and second users. Also included are program instructions for displaying an avatar representation of one or both of the first and second users along side of a game play display area. Also included are program instructions for modifying reactions of the avatar representation of one or both of the first and second users in response to the monitored reactions of the first and second users during the execution of game play.

### BRIEF DESCRIPTION OF THE DRAWINGS

The present invention will be readily understood by the following detailed description in conjunction with the accompanying drawings, and like reference numerals designate like structural elements.

Figure 1 illustrates an interactive game setup having an image capture device.

Figure 2 illustrates a method for ascertaining a pointing direction of an object placed in front of an image capture device.

Figure 3 is a block diagram of an exemplary user input system for interaction with an object on a graphical display.

Figure 4 is a simplified block diagram of a computer processing system configured to implement the embodiments of the invention described herein.

Figure 5 is a block diagram of a configuration of the components of a video game console adapted for use with a manipulated object serving as an alternative input device.

Figure 6 is a block diagram showing the functional blocks used to track and discriminate a pixel group corresponding to the user input device as it is being manipulated by the user.

Figure 7 shows a monitor having an image capture unit and a sound capture unit.

Figure 8 illustrates sound capture units when confronted with two sound sources.

Figure 9 illustrates the processing of sound A and sound B using a triangulation algorithm so that direction selection can occur.

Figure 10 illustrates a computing system that may be used in conjunction with an image-sound capture device.

Figure 11 illustrates an exemplary audio monitor including at least four microphones.

Figure 12 shows a simplified schematic diagram illustrating an array beam-forming module.

Figure 13 shows a high level schematic diagram illustrating a blind source separation scheme for separating the noise and source signal components of an audio signal.

Figure 14 is a schematic diagram illustrating a microphone array framework that incorporates adaptive noise cancellation.

Figures 15 and 16 show plan and rear elevation views, respectively, of an exemplary controller for interacting with the image capture device of Figure 1.

Figures 17 and 18a show plan and rear elevation views, respectively, of a controller having a rectangular configuration of LEDs.

Figure 18b shows a rear elevation view of a controller incorporates LEDs, a speaker, and a microphone.

Figure 18c shows a rear elevation view of a controller having LEDs in a rectangular configuration along with centrally located speaker on a rear panel thereof.

Figure 18d shows a rear elevation view of controller having five LEDs arranged in an arc formation.

Figure 18e shows a rear elevation view of a controller having LEDs arranged in a wide rectangular configuration.

Figure 18f shows a controller having six LEDs arranged in a cluster.

Figure 19 shows controller having an interface containing a number of controls and a motion sensing device.

Figure 20 shows a flowchart depicting an exemplary procedure communicating movement of controller to a computer program.

Figures 21-27 provide other examples of avatars reacting to emotions of the game users and representing those emotions and actions through avatar representations, and also illustrate examples of avatars reacting to real time activity of a game, during game play.

Figure 28 schematically illustrates the overall system architecture of the Sony® Playstation 3® entertainment device, a console that may be compatible with controllers for implementing an avatar control system in accordance with one embodiment of the present invention.

Figure 29 schematically illustrates the architecture of the Cell processor, in accordance with one embodiment of the present invention.

### DETAILED DESCRIPTION

In the following description, numerous specific details are set forth in order to provide a thorough understanding of the present invention. It will be apparent, however, to one skilled in the art that the present invention may be practiced without some or all of these specific details. In other instances, well known process steps have not been described in detail in order not to obscure the present invention.

The technology described herein can be used to provide an enhanced user experience for multiplayer gaming by representing affecting responses of players in on-screen avatars.
An avatar is an icon or graphic that a user can customize to represent him- or herself to other participants in a multiplayer or networked environment. An avatar can be customized using a wide variety of parameters including features such as eyes, eyebrows, nose, mouth, clothing, and accessories. There are an unlimited number of possible customizations that can be applied to avatars and the few listed above are not intended to be restrictive.

During gameplay against an opponent, either online on using a multiplayer mode from the same computing system, user avatars can be used to represent emotional or physical reactions to events occurring in the game and the facial reactions, vocalizations, and body movements of the users. Recognition of the facial features and body movements can be accomplished using a video capture device that may be part of a computing system along with image processing as will be described in greater detail below.

Additionally, the hand-held controller device used for interacting with the computing system can be equipped to determine acceleration, pitch, yaw, roll and the physical location of the controller in reference to the computing system using one or both of image capture and processing techniques or a motion sensor such as an accelerometer located within the controller device. Recognition of verbal reactions from the game players can be accomplished using a variety of methods including audio monitoring and sound processing logic. Some or all of this information can be received by the computing system and applied to user avatars in substantially real-time to mimic the actions and reactions of the corresponding actual users. In one embodiment only the avatars of a player's opponents will be visible. In another embodiment it would be possible for a user to see the animations on their own avatar.

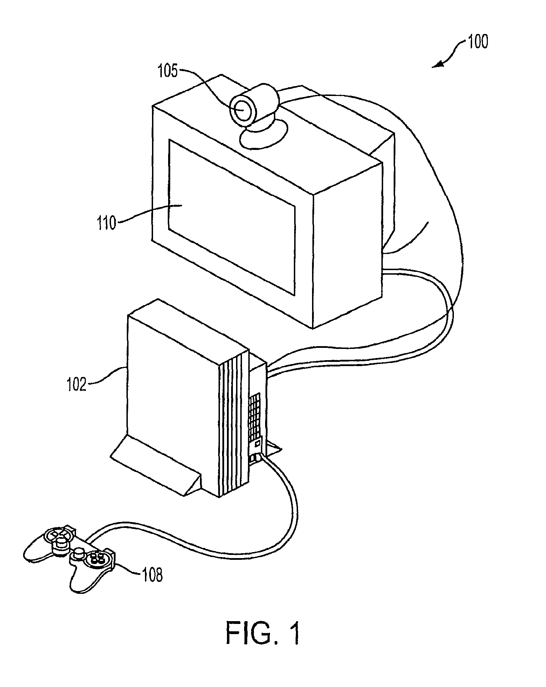

Figure 1 illustrates an interactive game setup 100, in accordance with one embodiment of the present invention. The interactive game setup 100 includes a computer 102, also referred to herein as "console," that may be coupled to a display screen 110. An image capture device 105 may be placed on top of the display screen 110 and coupled to the computer 102. Computer 102 may be a gaming system console which allows users to play video games and interface with the video games through controllers 108. The image capture device 105 is shown placed on top of the display screen 110, but it should be understood that the image capture device 105 can be placed in any other proximate location that will allow it to capture images that are located about in front of the display screen 110. Techniques for capturing these movements and interactions can vary, but exemplary techniques are described in United Kingdom Applications GB 0304024.3 (PCT/GB2004/000693) and GB 0304022.7 (PCT/GB2004/000703), each filed on February 21, 2003, and each of which is hereby incorporated by reference.

In one embodiment, image capture device 105 can be as simple as a standard web carn or can include more advanced technology. Image capture device 105 may be capable of capturing images, digitizing the images, and communicating the image data back to the computer 102. In some embodiments, the image capture device will have logic integrated therein for performing the digitizing and another embodiment the image capture device 105 will simply transmit an analog video signal to the computer 102 for digitizing. In either case, the image capture device 105 may be capable of capturing either color or black and white images of any object located in front of the image capture device 105.

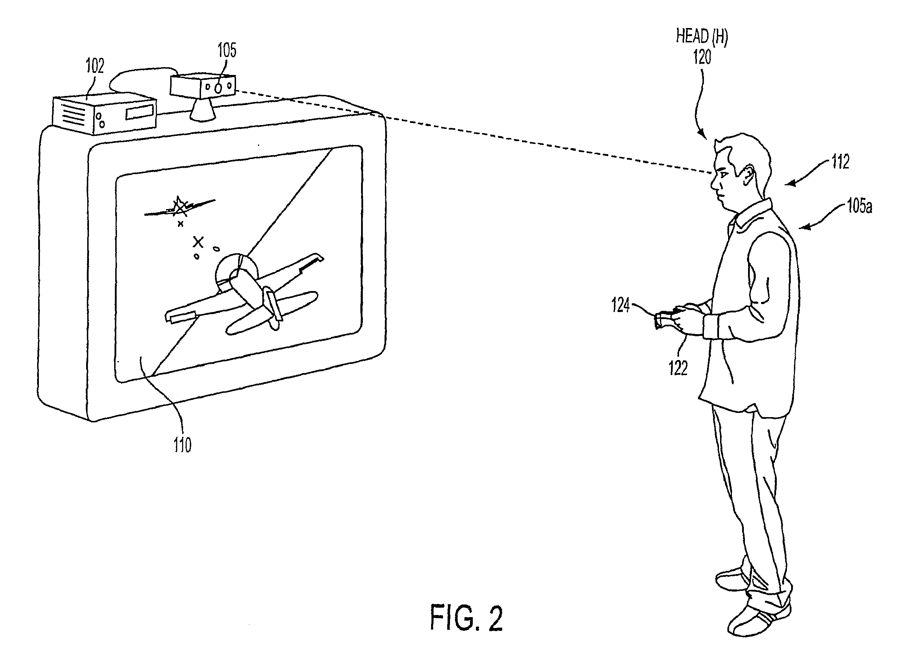

Figure 2 illustrates an exemplary computer 102 for processing image data provided by the image capture device 105 to ascertain a head and/or controller position and movement. As shown, the computer 102 may be connected to the image capture device 105. The image capture device 105 may be designed to focus onto a capture region 105a. In this example, a person 112 may be intending to interact with a computer program being executed by the computer 102. The computer program, in this example, may be a video game which may be rendered and displayed by the display screen 110.

In the example shown, the video game is a WWH biplane shooting game in which the person 112 wishes to aim at a target and earn points commensurate with his or her performance. The image capture device 105 can analyze the digital image capture of the person 112 to determine the location of the person's 112 head 120, and/or the location of the controller held by person's 112 hand 122. As shown, the person's 112 hand may be extended in front of his body and the image capture device will identify controller 124 when examining the captured digital image. The captured digital image will also be examined by code executed at the computer 102 to ascertain the location of the person's 112 head 120. In one embodiment, head tracking may be completed with a combination of a template matching (for speed performance), coupled to a face detection code. The face detection code will essentially identify the location of the user's face by locating the user's eyes and other facial features. For additional information on head and face detection, reference may be made to co-pending US Patent Application No. 10/663,236, entitled "METHOD AND APPARATUS FOR ADJUSTING A VIEW OF A SCENE BEING DISPLAYED ACCORDING TO TRACKED HEAD MOTION", filed on September 15, 2003, which is herein incorporated by reference.

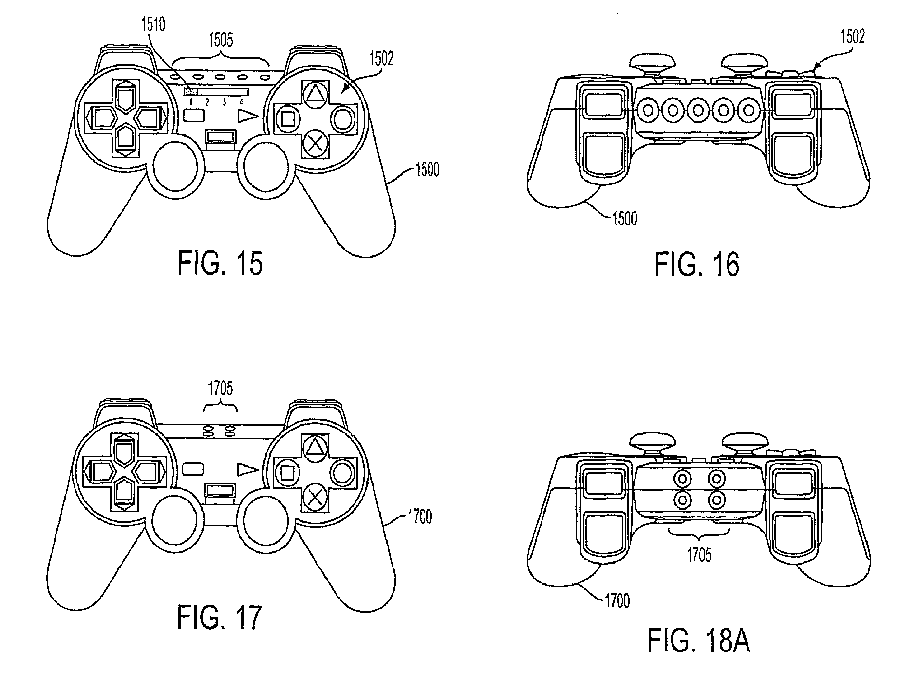

Controller 124 will, in one embodiment, have an identifier which may be color or lights (e.g., light emitting diodes "LEDs") coupled to the object so that the program analyzing the captured digital image will easily identify the location of the object 124. Exemplary such identifiers are described in more detail below with reference to Figures 15-19. Movements of the head 120 of user 112 can be interpreted as a physical response to the game, e.g., ducking or dodging on-screen elements, and these movements can be applied to the users avatar as described in more detail below.

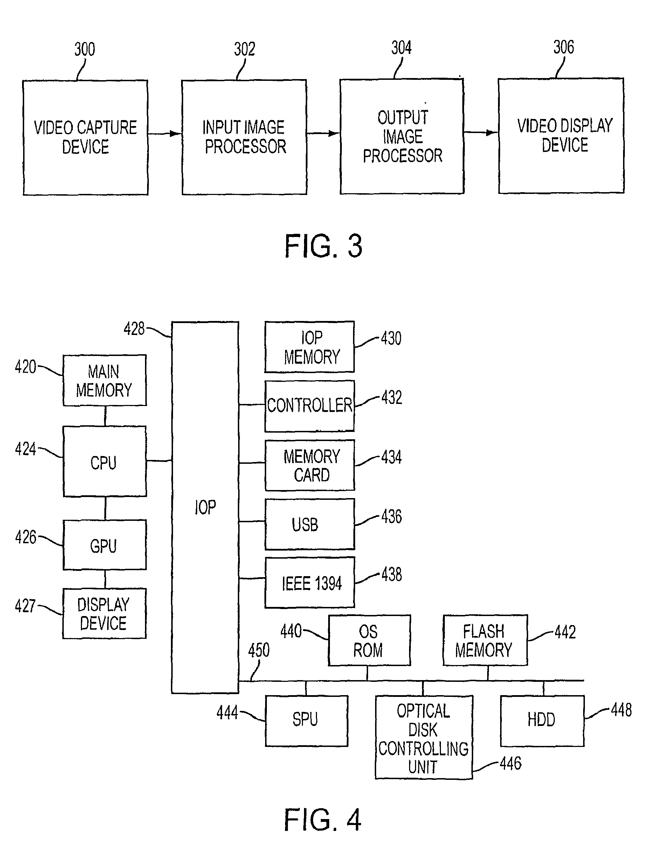

Figure 3 is a block diagram of an exemplary user input system for interaction with an object on a graphical display that can be used to implement embodiments of the present invention. As shown in Figure 3, the user input system may be comprised of a video capture device 300, an input image processor 302, an output image processor 304, and a video display device 306. Video capture device 300 may be any device capable of capturing sequences of video images, and, in one embodiment, may be a digital video camera (such as a "web-cam"), or similar image capturing device.

The video capture device 300 may be configured to provide depth image. In the this description, the terms "depth camera" and "three-dimensional camera" refer to any camera that is capable of obtaining distance or depth information as well as two-dimensional pixel information. For example, a depth camera can utilize controlled infrared lighting to obtain distance information. Another exemplary depth camera can be a stereo camera pair, which triangulates distance information using two standard cameras. Similarly, the term "depth sensing device" refers to any type of device that is capable of obtaining distance information as well as two-dimensional pixel information.

Camera 300 can therefore provide the ability to capture and map the third-dimension in addition to normal two-dimensional video imagery. Similar to normal cameras, a depth camera captures two-dimensional data for a plurality of pixels that comprise the video image.
These values are color values for the pixels, generally red, green, and blue (RGB) values for each pixel. In this manner, objects captured by the camera appear as two-dimension objects on a monitor. However, unlike a conventional camera, a depth camera also captures the z-components of the scene, which represent the depth values for the scene. Since the depth values are typically assigned to the z-axis, the depth values are often referred to as z-values.

In operation, a z-value may be captured for each pixel of the scene. Each z-value represents a distance from the camera to a particular object in the scene corresponding to the related pixel. In addition, a maximum detection range may be defined beyond which depth values will not be detected. This maximum range plane can be utilized by the embodiments of the present invention to provide user defined object tracking. Thus, using a depth camera, each object can be tracked in three dimensions. As a result, a computer system of the embodiments of the present invention can utilize the z-values, along with the two-dimensional pixel data, to create an enhanced three-dimensional interactive environment for the user. For more information on depth analysis, reference may be made to US Patent Application No. 10/448,614, entitled System and Method for Providing a Real-time three dimensional interactive environment, having a filing date of May 29, 2003, which is incorporated herein by reference.

Returning to Figure 3, input image processor 302 translates the captured video images (which may be depth images) of the control object into signals that are delivered to an output image processor. In one embodiment, input image processor 302 may be programmed to isolate the control object from the background in the captured video image through the depth information and generate an output signal responsive to the position and/or movement of the control object. The output image processor 304 may be programmed to effect translational and/or rotational movement of an object on the video display device 306 in response to signals received from the input image processor 302.

These and additional aspects of the present invention may be implemented by one or more processors which execute software instructions. According to one embodiment of the present invention, a single processor executes both input image processing and output image processing. However, as shown in the figures and for ease of description, the processing operations are shown as being divided between an input image processor 302 and an output image processor 304. It should be noted that the invention is in no way to be interpreted as limited to any special processor configuration, such as more than one processor. The multiple processing blocks shown in Figure 3 are shown only for convenience of description.

Figure 4 is a simplified block diagram of a computer processing system configured to implement the embodiments of the invention described herein. The processing system may represent a computer-based entertainment system embodiment that includes central processing unit ("CPU") 424 coupled to main memory 420 and graphical processing unit ("GPU") 426. CPU 424 may also be coupled to Input/Output Processor ("IOP") Bus 428. In one embodiment, GPU 426 includes an internal buffer for fast processing of pixel based graphical data. Additionally, GPU 426 can include an output processing portion or functionality to convert the image data processed into standard television signals, for example NTSC or PAL, for transmission to display device 427 connected external to the entertainment system or elements thereof. Alternatively, data output signals can be provided to a display device other than a television monitor, such as a computer monitor, LCD (Liquid Crystal Display) device, or other type of display device.

IOP bus 428 couples CPU 424 to various input/output devices and other busses or device. IOP bus 428 may be connected to input/output processor memory 430, controller 432, memory card 434, Universal Serial Bus (USB) port 436, IEEE1394 (also known as a Firewire interface) port 438, and bus 450. Bus 450 couples several other system components to CPU 424, including operating system ("OS") ROM 440, flash memory 442, sound processing unit ("SPU") 444, optical disc controlling 4, and hard disk drive ("HDD") 448. In one aspect of this embodiment, the video capture device can be directly connected to IOP bus 428 for transmission therethrough to CPU 424; where, data from the video capture device can be used to change or update the values used to generate the graphics images in GPU 426. Moreover, embodiments of the present invention can use a variety of image processing configurations and techniques, such as those described in U.S. Patent Application Serial No. 10/365,120 filed February 11, 2003, and entitled METHOD AND APPARATUS FOR REAL TIME MOTION CAPTURE, which may be hereby incorporated by reference in its entirety. The computer processing system may run on a CELL™ processor.

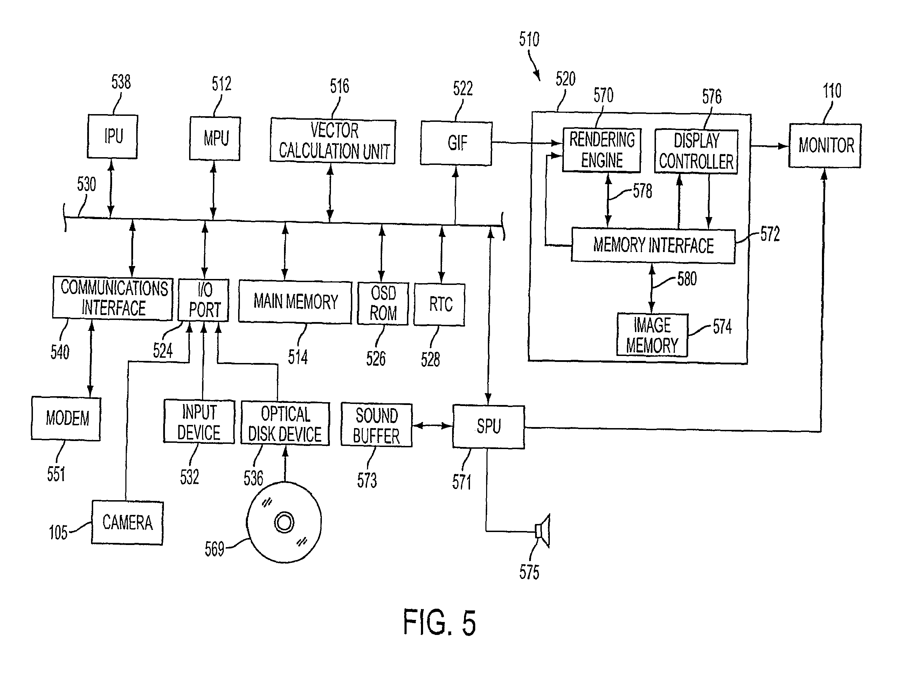

Figure 5 is a block diagram of a configuration of the components of a video game console adapted for use with a manipulated object serving as an alternative input device in accordance with one embodiment of the invention. Exemplary game console 510 may be equipped by a multiprocessor unit (MPU) 512 for control of overall console 510, main memory 514 which may be used for various program operations and for storage of data, vector calculation unit 516 for performing floating point vector calculations necessary for geometry processing, image processor 520 for generating data based on controls from MPU 512, and for outputting video signals to monitor 110 (for example a CRT), a graphics interface (GIF) 522 for carrying out mediation and the like over a transmission bus between MPU 512 or vector calculation unit 516 and image processor 520, input/output port 524 for facilitating reception and transmission of a data to and from peripheral devices, internal OSD functional ROM (OSDROM) 526 constituted by, for example, a flash memory, for performing control of a kernel or the like, and real time clock 528 having calendar and timer functions.

Main memory 514, vector calculation unit 516, GIF 522, OSDROM 526, real time clock (RTC) 528 and input/output port 524 are connected to MPU 512 over data bus 530. Also connected to BUS 530 may be image processing unit 538 which is a processor for expanding compressed moving images and texture images, thereby developing the image data. For example, the image processing unit 538 can serve functions for decoding and development of bit streams according to the MPEG2 or MPEG4 standard formats, macroblock decoding, performing inverse discrete cosine transformations, color space conversion, vector quantization and the like.

A sound system may be constituted by sound processing unit SPU 571 for generating musical or other sound effects on the basis of instructions from MPU 512, sound buffer 573 into which waveform data may be recorded by SPU 571, and speaker 575 for outputting the musical or other sound effects generated by SPU 571. It should be understood that speaker 575 may be incorporated as part of monitor 110 or may be provided as a separate audio line-out connection attached to external speaker 575.

Communications interface 540 may also be provided, connected to BUS 530, which is an interface having functions of input/output of digital data, and for input of digital contents according to the present invention. For example, through communications interface 540, user input data may be transmitted to, and status data received from, a server terminal on a network in order to accommodate on-line video gaming applications. Input device 532 (also known as a controller) for input of data (e.g. key input data or coordinate data) with respect to the console 510 optical disk device 536 for reproduction of the contents of optical disk 569, for example a CD-ROM or the like on which various programs and data (i.e. data concerning objects, texture data and the like), are connected to input/output port 524.

The present invention further includes digital video camera 105 which may be connected to input/output port 524. Input/output port 524 may be embodied by one or more input interfaces, including serial and USB interfaces, wherein digital video camera 190 may advantageously make use of the USB input or any other conventional interface appropriate for use with camera 105.

The above-mentioned image processor 520 includes a rendering engine 570, interface 572, image memory 574 and a display control device 576 (e.g. a programmable CRT controller, or the like). The rendering engine 570 executes operations for rendering of predetermined image data in the image memory, through memory interface 572, and in correspondence with rendering commands which are supplied from MPU 512. The rendering engine 570 has the capability of rendering, in real time, image data of 320 x 240 pixels or 640 x 480 pixels, conforming to, for example, NTSC or PAL standards, and more specifically, at a rate greater than ten to several tens of times per interval of from 1/60 to 1/30 of a second.

BUS 578 may be connected between memory interface 572 and the rendering engine 570, and a second BUS 580 may be connected between memory interface 572 and the image memory 574. First BUS 578 and second BUS 580, respectively, have a bit width of, for example 128 bits, and the rendering engine 570 may be capable of executing high speed rendering processing with respect to the image memory. Image memory 574 employs a unified memory structure in which, for example, a texture rendering region and a display rendering region, can be set in a uniform area.

Display controller 576 may be structured so as to write the texture data which has been retrieved from optical disk 569 through optical disk device 536, or texture data which has been created on main memory 514, to the texture rendering region of image memory 574, via memory interface 572. Image data which has been rendered in the display rendering region of image memory 174 may be read out via memory interface 572, outputting the same to monitor 110 whereby it may be displayed on a screen thereof.

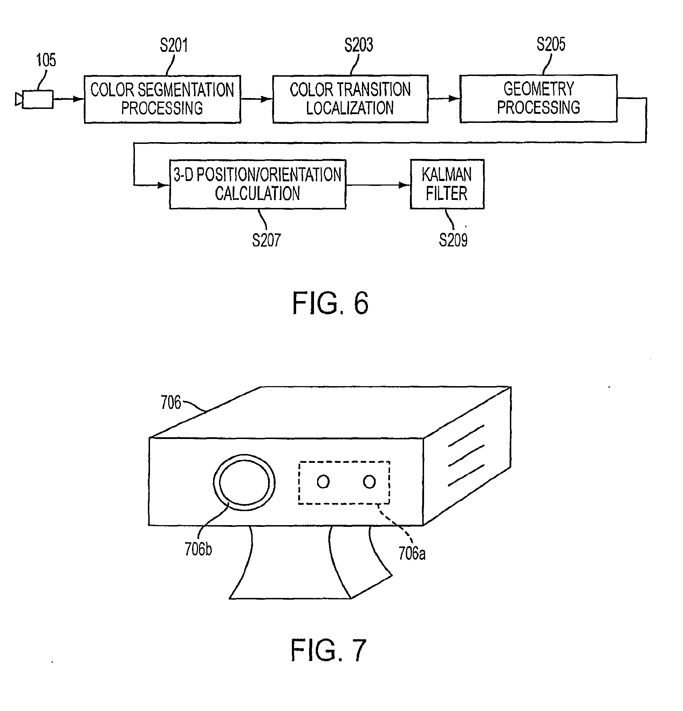

Figure 6 is a block diagram showing the functional blocks used to track and discriminate a pixel group corresponding to the user input device as it is being manipulated by the user in accordance with one embodiment of the invention. It should be understood that the functions depicted by the blocks are implemented by software which may be executed by the MPU 512 in game console 510 of Figure 5. Moreover, not all of the functions indicted by the blocks in Figure 6 are used for each embodiment.

Initially, the pixel data input from the camera may be supplied to game console 510 through input/output port interface 524, enabling the following processes to be performed thereon. First, as each pixel of the image is sampled, for example, on a raster basis, a color segmentation processing step S201 may be performed, whereby the color of each pixel is determined and the image is divided into various two-dimensional segments of different colors. Next, for certain embodiments, a color transition localization step S203 may be performed, whereby regions where segments of different colors adjoin are more specifically determined, thereby defining the locations of the image in which distinct color transitions occur. Then, a step for geometry processing S205 may be performed which, depending on the embodiment, comprises either an edge detection process or performing calculations for area statistics, to thereby define in algebraic or geometric terms the lines, curves and/or polygons corresponding to the edges of the object of interest.

The three-dimensional position and orientation of the object are calculated in step S207, according to algorithms which are to be described in association with the subsequent descriptions of preferred embodiments of the present invention. The data of three-dimensional position and orientation also undergoes a processing step S209 for Kalman filtering to improve performance. Such processing may be performed to estimate where the object is going to be at a point in time, and to reject spurious measurements that could not be possible, and therefore are considered to lie outside the true data set. Another reason for Kalman filtering is that the camera 105 produces images at 30 Hz, whereas the typical display runs at 60 Hz, so Kalman filtering fills the gaps in the data used for controlling action in the game program. Smoothing of discrete data via Kalman filtering is well known in the field of computer vision and hence will not be elaborated on further.

It is also possible to receive sounds, such as verbal sounds emitted by a user or environmental sounds, process the sounds, and program the user's avatar to respond such sounds. In this embodiment, a monitor 706, shown by way of example in Figure 7, may be provided which includes image capture unit 706b and a sound capture unit 706a. A sound source can be a noise generated by an input object, device, a hand clap or a foot tap, or any other noise. The sound will then be captured by the sound capture unit 706a, and processed by the computing system 102 (Figure 1) for interaction. Voice recognition may be used to enable the identification of voice commands. In addition, the user may be in communication with remote users connected to the Internet or network, but who are also directly or partially involved in the interactivity of the game.

In accordance with one embodiment of the present invention, the sound capture unit 706a may be configured to include at least two microphones which will enable the computing system 102 to select sound coming from particular directions. In one embodiment, computing system 102 is programmed to filter out sounds from directions which are not central to the interactivity so that distracting sounds in the environment will not interfere with or confuse the execution of the interactive program. In a similar manner, the sound capture unit can isolate sounds from a target focus zone to reliably identify an intensity value. As will be described below, the zone of focus may be identified by the active image area that is the focus point of the image capture unit 706b. In an alternative manner, the zone of focus can be manually selected from a choice of zones presented to the user after an initialization stage. In another embodiment, each sound is identified using a plurality of microphones as coming from a particular direction with respect to monitor 706. The user avatar, as described in further detail below, may then be programmed to respond to the particular sound, e.g., by turning its head toward the origin of the sound.

The image-sound capture device 706 includes an image capture unit 706b, and the sound capture unit 706a. The image-sound capture device 706 may be capable of digitally capturing image frames and then transferring those image frames to the computing system 102 (Figure 1) for further processing. An example of the image capture unit 706b may be a web camera, which is commonly used when video images are desired to be captured and then transferred digitally to a computing device for subsequent storage or communication over a network, such as the Internet. Other types of image capture devices are also contemplated, whether analog or digital, so long as the image data is digitally processed to enable the identification and filtering. In one preferred embodiment, the digital processing to enable the filtering may be done in software, after the input data is received. The sound capture unit 706a is shown including a pair of microphones (MIC1 and MIC2). The microphones are standard microphones, which can be integrated into the housing that makes up the image-sound capture device 706.

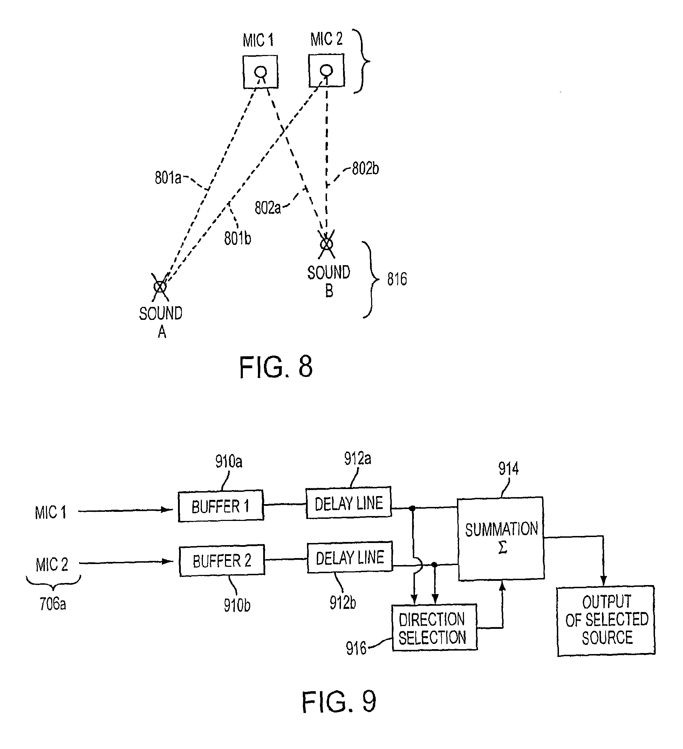

Figure 8 illustrates sound capture units 706a when confronted with sound sources 816 from sound A and sound B. As shown, sound A will project its audible sound and will be detected by MIC1 and MIC2 along sound paths 801a and 801b. Sound B will be projected toward MIC1 and MIC2 over sound paths 802a and 802b. As illustrated, the sound paths for sound A will be of different lengths, thus providing for a relative delay when compared to sound paths 802a and 802b. The sound coming from each of sound A and sound B will then be processed using a standard triangulation algorithm so that direction selection can occur in box 916, shown in Figure 9. The sound coming from MIC1 and MIC2 will each be buffered in buffers 1 and 2 (910a, 910b), and passed through delay lines (912a, 912b). In one embodiment, the buffering and delay process will be controlled by software, although hardware can be custom designed to handle the operations as well. Based on the triangulation, direction selection 916 will trigger identification and selection of one of the sound sources 816.

The sound coming from each of MICs1 and MICs2 will be summed in box 914 before being output as the output of the selected source. In this manner, sound coming from directions other than the direction in the active image area will be filtered out so that such sound sources do not distract processing by the computer system 102 (Figure 1) or distract communication with other users that may be interactively playing a video game over a network, or the Internet. A video game or other application utilizing this technology can reliably identify and quantify an intensity value of a sound originating from a zone of focus at a predetermined or selected direction relative the sound capture device.

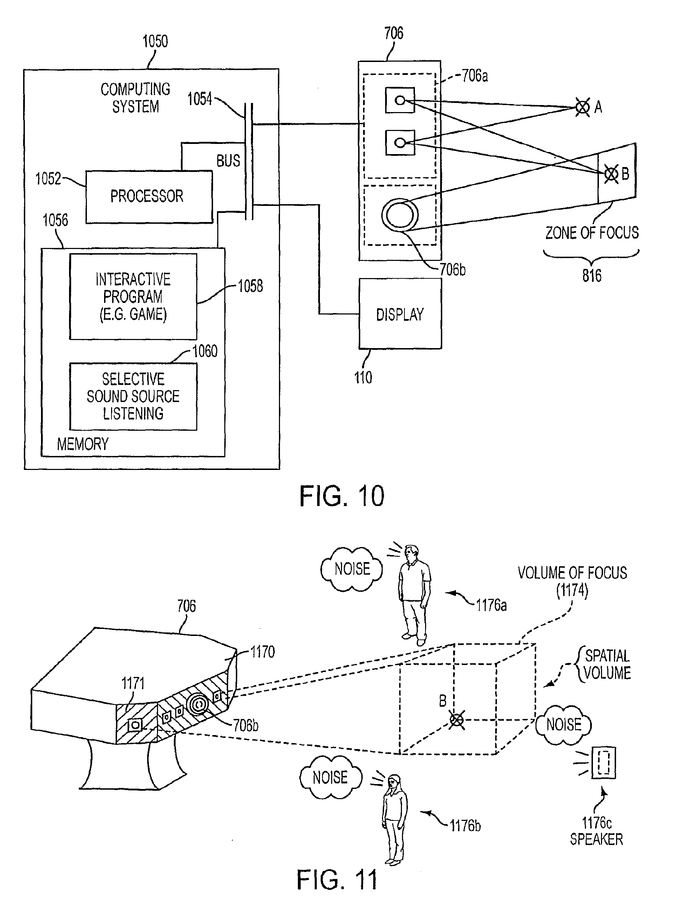

Figure 10 illustrates a computing system 1050 that may be used in conjunction with the image-sound capture device 706, in accordance with one embodiment of the present invention. The computing system 1050 includes a processor 1052, and memory 1056. A bus 1054 will interconnect the processor and the memory 1056 with the image-sound capture device 706. The memory 1056 will include at least part of the interactive program 1058, and also include selective sound source listening logic or code 1060 for processing the received sound source data. Based on where the zone of focus is identified to be by the image capture unit 706b, sound sources outside of the zone of focus will be selectively filtered by the selective sound source listening logic 1060 being executed (e.g., by the processor and stored at least partially in the memory 1056). The computing system is shown in its most simplistic form, but emphasis is placed on the fact that any hardware configuration can be used, so long as the hardware can process the instructions to effect the processing of the incoming sound sources and thus enable the selective listening.

The computing system 1050 is also shown interconnected with the display 110 by way of the bus. In this example, the zone of focus may be identified by the image capture unit being focused toward the sound source B. Sound coming from other sound sources, such as sound source A will be substantially filtered out by the selective sound source listening logic 1060 when the sound is captured by the sound capture unit 706a and transferred to the computing system 1050.

In one specific example, a player can be participating in an Internet or networked video game competition with another user where each user's primary audible experience will be by way of speakers. The speakers may be part of the computing system or may be part of the monitor 706. Suppose, therefore, that the local speakers are what may be generating sound source A as shown in Figure 4. In order not to feedback the sound coming out of the local speakers for sound source A to the competing user, the selective sound source listening logic 1060 will filter out the sound of sound source A so that the competing user will not be provided with feedback of his or her own sound or voice. By supplying this filtering, it is possible to have interactive communication over a network while interfacing with a video game, while advantageously avoiding destructive feedback during the process.

Figure 11 illustrates an exemplary monitor 706 including at least four microphones (MIC1 through MIC4). The sound capture unit 706a, is therefore capable of triangulation with better granularity to identify the location of sound sources 816 (A and B). That is, by providing an additional microphone, it is possible to more accurately define the location of the sound sources and thus, eliminate and filter out sound sources that are not of interest or can be destructive to game play or interactivity with a computing system. As illustrated in Figure 10, sound source 816 (B) may be the sound source of interest as identified by the video capture unit 706b. Continuing with example of Figure 10, Figure 11 identifies how sound source B is identified to a spatial volume.

The spatial volume at which sound source B is located will define the volume of focus 1174. By identifying a volume of focus, it is possible to eliminate or filter out noises that are not within a specific volume (i.e., which are not just in a direction). To facilitate the selection of a volume of focus 1174, the image-sound capture device monitor 706 will preferably include at least four microphones. At least one of the microphones will be in a different plane than three of the microphones. By maintaining one of the microphones in plane 1171 and the remainder of the four in plane 1170 of the image-sound capture device monitor 706, it is possible to define a spatial volume.

Consequently, noise coming from other people in the vicinity (shown as 1176a and 1176b) will be filtered out as they do not lie within the spatial volume defined in the volume focus 1174. Additionally, noise that may be created just outside of the spatial volume, as shown by speaker 1176c, will also be filtered out as it falls outside of the spatial volume.

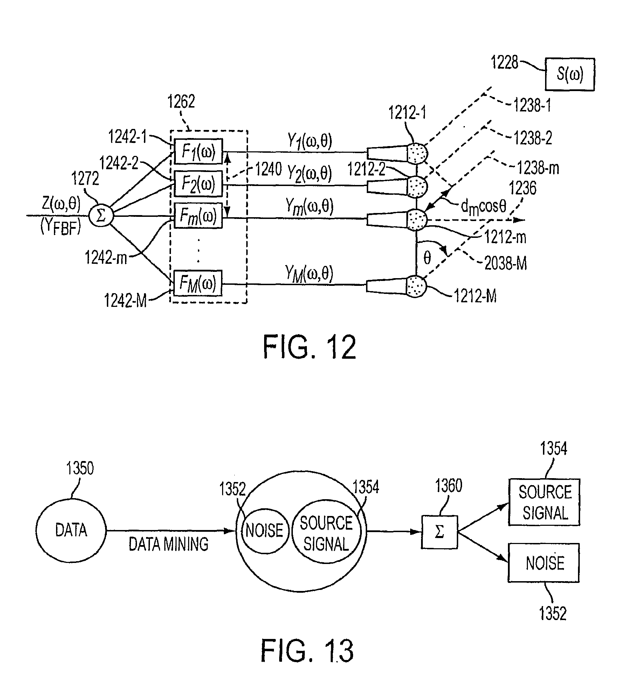

An exemplary implementation of a filtering algorithm will now be described with reference to Figures 12-14. This implementation example provides an audio input system associated with a portable consumer device through a microphone array. The voice input system may be capable of isolating a target audio signal from multiple noise signals. Additionally, there are no constraints on the movement of the portable consumer device, which has the microphone array affixed thereto. The microphone array framework includes four main modules in one embodiment of the invention. The first module may be an acoustic echo cancellation (AEC) module. The AEC module may be configured to cancel portable consumer device generated noises. For example, where the portable consumer device is a video game controller, the noises, associated with video game play, i.e., music, explosions, voices, etc., are all known. Thus, a filter applied to the signal from each of the microphone sensors of the microphone array may remove these known device generated noises. In another embodiment, the AEC module may be optional and may not be included with the modules described below. Further details on acoustic echo cancellation may be found in "Frequency-Domain and Multirate Adaptive Filtering" by John J. Shynk, IEEE Signal Processing Magazine, pp. 14-37, January 1992. This article is incorporated by reference for all purposes.

Figure 12 is a simplified schematic diagram illustrating an array beam-forming module configured to suppress a signal not coming from a listening direction in accordance with one embodiment of the invention. In one embodiment, the beam-forming may be based on filter-and-sum beam-forming. The finite impulse response (FIR) filters, also referred to as signal passing filters, are generated through an array calibration process which may be adaptive. Thus, the beam-forming may be essentially an adaptive beam-former that can track and steer the beam, i.e., listening direction, toward a source signal 2028 without physical movement of the sensor array. It will be apparent to one skilled in the art that beam-forming, which refers to methods that can have signals from a focal direction enhanced, may be thought of as a process to algorithmically (not physically) steer microphone sensors 1212-1 through 1212-M towards a desired target signal. The direction that the sensors 1212-1 through 1212-M look at may be referred to as the beam-forming direction or listening direction, which may either be fixed or adaptive at run time.

The fundamental idea behind beam-forming is that the sound signals from a desired source reaches the array of microphone sensors with different time delays. The geometry placement of the array being pre-calibrated, thus, the path-length-difference between the sound source and sensor array is a known parameter. Therefore, a process referred to as cross-correlation may be used to time-align signals from different sensors. The time-align signals from various sensors are weighted according to the beam-forming direction. The weighted signals are then filtered in terms of sensor-specific noise-cancellation setup, i.e., each sensor may be associated with a filter, referred to as a matched filter F₁ F_{M}, 1242-1 through 1242-M, which are included in signal-passing-filter 1262. The filtered signals from each sensor are then summed together through module 1272 to generate output Z(ω,θ). It should be appreciated that the above-described process may be referred to as auto-correlation.
Furthermore, as the signals that do not lie along the beam-forming direction remain misaligned along the time axes, these signals become attenuated by the averaging. As is common with an array-based capturing system, the overall performance of the microphone array to capture sound from a desired spatial direction (using straight line geometry placement) or spatial volumes (using convex geometry array placement) depends on the ability to locate and track the sound source. However, in an environment with complicated reverberation noise, e.g., a videogame environment, it is practically infeasible to build a general sound location tracking system without integrating the environmental specific parameters.

Still referring to Figure 12, the adaptive beam-forming may be alternatively explained as a two-part process. In a first part, the broadside noise is assumed to be in a far field. That is, the distance from source 1228 to microphone centers 1212-1 through 1212-M is large enough so that it may be initially assumed that source 1228 is located on a normal to each of the microphone sensors. For example, with reference to microphone sensor 1212-m the source would be located along normal 1236. Thus, the broadside noise may be enhanced by applying a filter referred to as F1 herein. Next, a signal passing filter that may be calibrated periodically may be configured to determine a factor, referred to as F2, that allows the microphone sensor array to adapt to movement. The determination of F2 is explained further with reference to the adaptive array calibration module. In one embodiment, the signal passing filter may be calibrated every 100 milliseconds. Thus, every 100 milliseconds the signal passing filter may be applied to the fixed beam-forming. In one embodiment, matched filters 1242-1 through 1242-M supply a steering factor, F2, for each microphone, thereby adjusting the listening direction as illustrated by lines 1238-1 through 1238-M. Considering a sinusoidal far-field plane wave propagating towards the sensors at incidence angle of θ in Figure 12, the time-delay for the wave to travel a distance of d between two adjacent sensors may be given by dₘcos θ. Further details on fixed beam-forming may be found in the article entitled "Beamforming: A Versatile Approach to Spatial Filtering" by Barry D. Van Veen and Kevin M. Buckley, IEEE ASSP MAGAZINE April 1988. This article is incorporated by reference for all purposes.

Figure 13 shows a high level schematic diagram illustrating a blind source separation scheme for separating the noise and source signal components of an audio signal. It should be appreciated that explicit knowledge of the source signal and the noise within the audio signal may not be available. However, it is known that the characteristics of the source signal and the noise are different. For example, a first speaker's audio signal may be distinguished from a second speaker's audio signal because their voices are different and the type of noise is different. Thus, data 1350 representing the incoming audio signal, which includes noise and a source signal, may be separated into a noise component 1352 and source signal 1354 through a data mining operation. Separation filter 1360 then separates the source signal 1350 from the noise signal 1352.

One skilled in the art will appreciate that one method for performing the data mining may be through independent component analysis (ICA) which analyzes the data and finds independent components through second order statistics in accordance with one embodiment of the invention. Thus, a second order statistic may be calculated to describe or define the characteristics of the data in order to capture a sound fingerprint which distinguishes the various sounds. The separation filter may then enabled to separate the source signal from the noise signal. It should be appreciated that the computation of the sound fingerprint may be periodically performed. Thus, through this adaptive array calibration process that utilizes blind source separation, the listening direction may be adjusted each period. Once the signals are separated by separation filter 1360 it will be apparent to one skilled in the art that the tracking problem may be resolved. That is, based upon the multiple microphones of the sensor array the time arrival of delays may be determined for use in tracking source signal 1354. One skilled in the art will appreciate that the second order of statistics referred to above may be referred to as an auto correlation or cross correlation scheme. Further details on blind source separation using second order statistics may be found in the article entitled "System Identification Using Non-Stationary Signals" by O. Shalvi and E. Weinstein, IEEE Transactions on Signal Processing, vol-44(no.8): 2055-2063, August, 1996. This article is hereby incorporated by reference for all purposes.

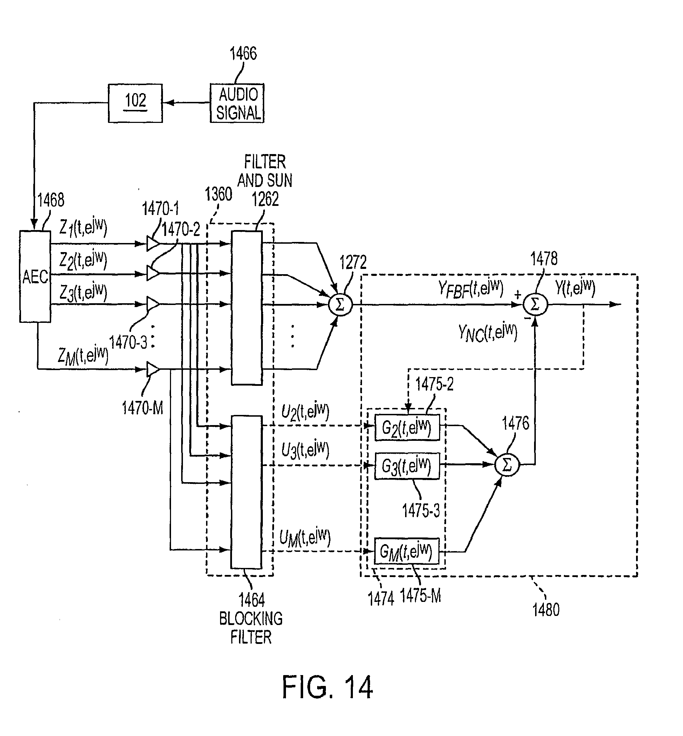

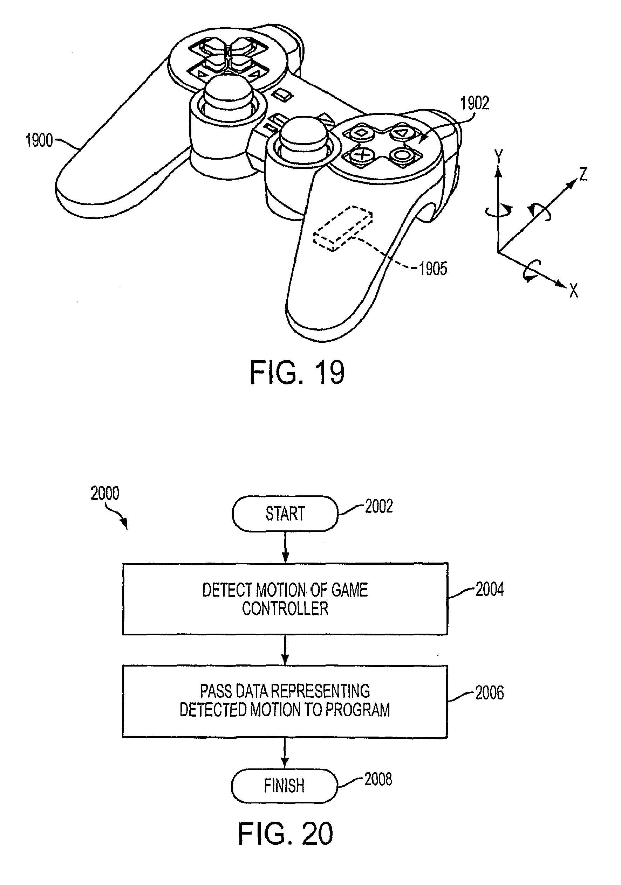

Figure 14 is a schematic diagram illustrating a microphone array framework that incorporates adaptive noise cancellation. Audio signal 1466 which includes noise and a source signal may be received through a microphone sensor array which may be affixed to a portable consumer device 102, e.g., a videogame console or computing device. The audio signal received by portable consumer device 102 may then be pre-processed through acoustic echo cancellation (ABC) module 1468. Here, acoustic echo cancellation may be performed as described by way of example in U.S. Patent Application 10/650,409, which is incorporated herein by reference. Signals Z₁ through Z_{M}, which correspond to the number of microphone sensors in the microphone array, are generated and distributed over channels 1470-1 through 1470-M. It should be appreciated that channel 1470-1 may be a reference channel. The corresponding signals are then delivered to filter-and-sum module 1262. It should be appreciated that filter-and-sum module 1262 performs the adaptive beam-forming as described above with reference to Figure 20. At the same time, signals from channels 1470-1 through 1470-M are delivered to blocking filter 1464.

Blocking filter 1464 may be configured to perform reverse beam-forming where the target signal may be viewed as noise. Thus, blocking filter 1464 attenuates the source signal and enhances noise. That is, blocking filter 1464 may be configured to determine a calibration coefficient F3 which may be considered the inverse of calibration coefficient F2 determined by the adaptive beam-forming process. One skilled in the art will appreciate that the adaptive array calibration referred to with reference to Figure 13, occurs in the background of the process described herein. Filter-and-sum module 1262 and blocking filter module 1464 make up separation filter 1360. Noise enhanced signals U₂ through U_{M} are then transmitted to corresponding adaptive filters 1475-2 through 1475-M, respectively. Adaptive filters 1475-2 through 1475-M are included in adaptive filter module 1474. Here, adaptive filters 1475-2 through 1475-M are configured to align the corresponding signals for the summation operation in module 1476. One skilled in the art will appreciate that the noise may not stationary, therefore, the signals must be aligned prior to the summation operation.

Still referring to Figure 14, the signal from the summation operation of module 1476 may then combined with the signal output from summation operation in module 1472 in order to provide a reduced noise signal through the summation operation module 1478. That is, the enhanced signal output for module 1472 may be combined with the enhanced noise signal from module 1476 in a manner that enhances the desired source signal. It should be appreciated block 1480 represents the adaptive noise cancellation operation. Additionally, the array calibration occurring in the background may take place every 100 milliseconds as long as a detected signal-to-noise-ratio may be above zero decibels in one embodiment. As mentioned above, the array calibration updates the signal-passing-filler used in filter-and-sum beam-former 1262 and signal-blocking-filter 1464 that generates pure interferences whose signal-to-noise-ratio may be less than -100 decibels.

In one embodiment, the microphone sensor array output signal may be passed through a post-processing module to further refine the voice quality based on person-dependent voice spectrum filtering by Bayesian statistic modeling. Further information on voice spectrum filtering may be found in the article entitled "Speech Enhancement Using a Mixture-Maximum Model" by David Burshtein, IEEE Transactions on Speech and Audio Processing vol. 10, No. 6, September 2002. This article in incorporated by reference for all purposes. It should be appreciated that the signal processing algorithms mentioned herein are carried out in the frequency domain. In addition, a fast and efficient Fast Fourier transform (FFT) may be applied to reach real time signal response. In one embodiment, the implemented software requires 25 FFT operations with window length of 1024 for every signal input chunk (512 signal samples in a 16 kHz sampling rate). In the exemplary case of a four-sensor microphone array with equally spaced straight line geometry, without applying acoustic echo cancellation and Bayesian model base voice spectrum filtering, the total computation involved may be about 250 mega floating point operations (250M Flops).

Continuing with Figure 14, separation filter 1360 may be decomposed into two orthogonal components that lie in the range and null space by QR orthogonalization procedures. That is, the signal blocking filter coefficient, F3, may be obtained from the null space and the signal passing filter coefficient, F2, may be obtained from the rank space. This process may be characterized as Generalized Sidelobe Canceler (GSC) approach. Further details of the GSC approach may be found in the article entitled "Beamforming: A Versatile Approach to Spatial Filtering" which has been incorporated by reference above.

The above described embodiment describes a method and a system for providing audio input in a high noise environment. The audio input system includes a microphone array that may be affixed to a video game controller, e.g., a SONY PLAYSTATION 2® video game controller or any other suitable video game controller. The microphone array may be configured so as to not place any constraints on the movement of the video game controller. The signals received by the microphone sensors of the microphone array are assumed to include a foreground speaker or audio signal and various background noises including room reverberation. Since the time-delay between background and foreground from various sensors may be different, their second-order statistics in frequency spectrum domain are independent of each other, therefore, the signals may be separated on a frequency component basis. Then, the separated signal frequency components are recombined to reconstruct the foreground desired audio signal. It should be further appreciated that the embodiments described herein define a real time voice input system for issuing commands for a video game, or communicating with other players within a noisy environment. In other embodiments, audio processor is capable of identifying a direction of origin of a particular sound and pass that information to the software, which, as described hereinafter, can respond to the sound by directing an avatar to turn its head toward the sound and, if the type sound is identified, e.g., a door closing, respond to the type of sound.

A video game controller may typically a hand-held device having buttons, knobs, and/or joysticks for providing input into a video game program for controlling action within the game. It would be desirable to add additional functionality to the controller by sensing movement and/or rotation of the controller in space. Thus, when a user turns or moves a controller as an emotional response to on-screen action, the user's avatar can move in a similar manner. For example, when a user is manipulating a controller to steer a virtual racecar, he or she may tilt the whole controller device as an emotional response to a particularly harrowing turn. This motion can then be sensed by an image capture device as described above with reference to Figures 1-14.

Traditionally, video game controllers provide a stream of analog signals and/or digital data over a cable or wirelessly using one or more of available infra-red or radio frequency (RF) interfaces. For multiplayer gaming, more than one controller may be placed into electronic communication with the computer system (e.g., the game console). Each person interacting with the program may be assigned a number, e.g., "Player 1," "Player 2," etc. When game controllers are connected to the system, each user can be assigned a number according to the port number to which the controller is connected. Thus, if a computer game has four ports, Player 1 is connected to port number 1, Player 2 is connected to port number 2, etc. Wireless controllers allow players to select their player number based on a wireless channel or other hand-shake protocol mechanism allowing the controller to identify itself as for Player 1, Player 2, and so on.

Figures 15 and 16 show an exemplary controller 1500 that interacts with an image capture device 105 (Figure 1). Controller 1500 includes an interface 1502 containing a plurality of interface devices including various buttons and joysticks. The controllers discussed herein can be either wired or wireless. Technologies, such as WiFi, Bluetooth^{™}, IR, sound, and lights may work to interface with a computer, such as a game console. In one embodiment, controller 1500 has an LED array 1505. The LED array may be configured in various layouts, including a 2x2 stack where each LEDs may be positioned at a vertex of an imaginary rectangular or square-shaped binding box. By tracking the position and deformation of the binding box as it is projected onto the image plane produced by an image capture device, the transformation and deformations may be analyzed in a video analyzer to decipher position and orientation information of the controller. LED array 1505 may generate infrared or visible light. Image capture device 105 (Figure 1) can identify LED array 1505 as described above with reference to various other inventive embodiments. Each controller can be designated as Player 1 through, for example, Player 4, using switch 1510, which allows a user selection of player number 1-4. Each player number selection corresponds to a unique pattern or modulation of LEDs being illuminated by LED array 1505. For example, for Player 1, 1st, 3rd, and 5th LEDs are illuminated. Such player information may be encoded and transmitted in a repeated fashion over time across multiple video frames. It may be desirable to engage in an interleave scheme so the controller or device LEDS can switch between a tracking mode and a transmission mode. In the tracking mode, all LEDs may be turned on during a first portion of a cycle. In the transmission mode, information may be modulated by the LEDs during a second portion of a cycle. Over time, the LEDS transmit tracking and communications information to a video analyzer or suitable device capable of receiving the signal. In the transmission mode, the LEDs may encode information representative of the player I.D. The period and duty cycle may be chosen to accommodate speed of tracking, lighting conditions, number of controllers, etc. By interleaving communications and tracking information, a video capture device may be supplied with adequate information to compute tracking parameters for each controller and to discriminate between controllers. Such discrimination may be used in a video analyzer to isolate each physical controller when monitoring and tracking the position and orientation and other metrics of the controller movement.

In the transmission mode, other information, including commands or state information may be transmitted by the controller or device LEDs and according to known encoding and modulation schemes. On the receiver side, a video analyzer coupled to the video capture device may sync with and track the state of the LEDS and decode the information and controller movements. It is known that higher bandwidth may be achieved by modulating data across frames in the transmission mode cycle.

User interaction with interface 1502 may cause one or more of LEDs in LED array 1505 to modulate and/or change color. For example, as a user moves a joystick LEDs may change brightness or transmit information. Furthermore, each button may be mapped to a change in color or intensity of one or more of the LEDs in LED array 1505.

As controller 1500 is moved about in three-dimensional space and rotated in one of a roll, yaw, or pitch direction (explained in greater detail below with reference to Figure 19) image capture device 105 in conjunction with computer system 102 (Figure 1) may be capable of identifying these changes and generating a two dimensional vector (for describing movement on the image plane, or a three dimensional vector for describing movement in three dimensional space. The vector can be provided as a series of coordinates describing relative movement and/or an absolute position with respect to the image capture device 105. As would be evident to those skilled in the art, movement on a plane perpendicular to the line of sight of image capture device 105 (the image plane) can be identified by an absolute position within the image capture zone, while movement of controller 1500 closer to image capture device 105 can be identified by LED array 1505 appearing to spread out, i.e., the distance between the first and last LED on the image plane can be measured to calculate distance from the image capture device.

Figures 17 and 18a show a controller 1700 having a rectangular configuration of LEDs 1705, thereby allowing movement of controller 1700 on three and rotation about each axis to be detected. Although only LEDs are shown, it should be recognized that this is for exemplary purposes only, and any number of LEDs distributed on a plane, and not collinear, would be possible. As controller 1700 may be pitched forward or backward, the top and bottom LEDs will get closer to each other while the left and right LEDs remain the same distance apart. Likewise, as controller 1700 yaws left or right, the left and right LEDs will appear to approach each other while the top and bottom LEDs remain the same distance apart. Rolling motion of controller 1700 can be detected by identifying the orientation of the LEDs on the image plane. As the controller moves closer to image capture device 105 along the line of sight thereof, all the LEDs will appear to spread out. Finally, the controller's movement along the image plane can be tracked by identifying the location of the LEDs on the image plane, thereby identifying movement along respective x and y axes. As mentioned above with respect to Figures 15 and 16, LED modulation can be used to identify user interactions with interface 1702.

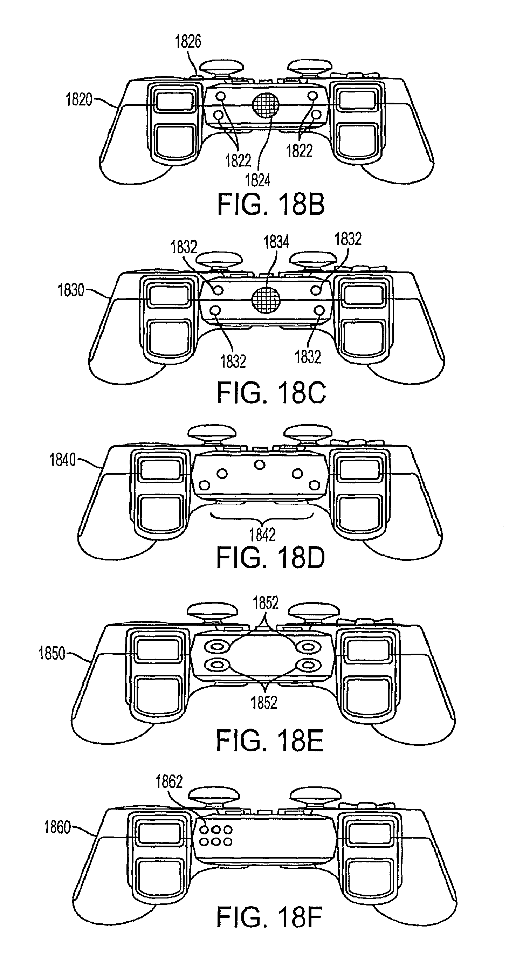

Figure 18b shows controller 1820 according to another embodiment, which incorporates LEDs 1822, a speaker 1824, and a microphone 1826. LEDs 1822 provide position and orientation information using an image capture device, while speaker 1824 can generate audible or ultrasonic sound, providing sound effects and/or communication using an audio monitor as described above with reference to Figures 7-14. Microphone 1826 provides sound input to the system, which can be used for issuing voice commands, or for communicating with other players in an on-line multiplayer environment.

Figure 18c shows a controller 1830 having LEDs 1832 in a rectangular configuration along with centrally located speaker 1834 on a rear panel of controller 1830. Figure 18d shows a controller 1840 having five LEDs 1842 arranged in an arc formation. Figure 18e shows a controller 1850 having LEDs arranged in a wide rectangular configuration. Figure 18f shows a controller 1860 having six LEDs 1862 arranged in a cluster. Those skilled in the art will recognize that other LED configurations are possible.

Figure 19 shows controller 1900 having an interface 1902 containing a number of controls and a motion sensing device 1905 therein. In one embodiment, motion sensing device 1905 may be a three axis accelerometer. Accelerometers are generally known in the field of electronics, and typically comprise a small solid state device having structures that respond to changes in momentum, and sensors that detect the responses. Miniaturized accelerometers are available for sensing translational movements as well as rotational movements. Translational movements are movements along x, y, and z axes. Rotational movements are rotations about one or more of the x, y, and z axes. Translation-detecting accelerometers can detect the direction of the pull of gravity, and therefore identify the absolute orientation of a device (such as a game controller) with respect to the pull of gravity. Controller 1900 includes a translation sensing accelerometer 1905, which generates digital data received by a circuit (not shown) contained within controller 1900. The digital data can be converted into translational movement vectors and orientation of the device, determinable from the pull of gravity on the device. In this manner, the circuit identifies motion and orientation of controller 1900 and transmits this data along with other data representing user interaction with various controls of interface 1902. to the game console in a manner generally known in the art, e.g., via a cable, infra-red, or radio connection. It is also possible to encode the data into LED modulations for viewing by an image capture device. The motion captured by the device can be represented as absolute position and orientation information (taking an initial position as the origin) and/or change in position and orientation.

Figure 20 shows a flowchart 2000 depicting an exemplary procedure communicating movement of controller 2000 to a computer program. The procedure begins as indicated by start block 2002 and proceeds to operation 2004 wherein the motion of the game controller may be detected. In one embodiment, motion may be detected by detecting changes in momentum of the controller, which may be detected using an accelerometer. The changes in momentum may then be converted into movement vectors and/or absolute position vector from an initial origin, and a vector representing the pull of gravity, which identifies the orientation of controller 2000. The movement, position, and orientation vectors can be represented as a series of coordinates. After detecting the motion of game controller 2000 in operation 2004, the procedure flows to operation 2006 wherein data representing the detected motion may be passed to the program which requested the data or may be otherwise receptive to the data.

In specific embodiments, the image or audio processing functions described above for determining controller player number, orientation and/or position of one or more input objects including controllers may be carried out in a process executing on a computer system. The computing system may be also executing a main process, which may be a gaming application, that requests or is otherwise receptive to the data generated from the image or audio processing, such data comprising the intensity value, controller player number, orientation and/or position of one or more input objects including controllers, controller actuation, etc. In various embodiments, the process performing the image and/or audio processing functions may be a driver for a video camera or video/audio monitoring device, the driver providing the data to the main process via any type of inter-process communication which may be implementation specific as generally known and understood in the art. The process performing image or audio processing executes on the same processor or a different processor as the one executing the gaming or other software. It may also be possible to have a common process for both image or audio processing and game functionality in the same process, e.g., using a procedure call. Therefore, while it may be stated herein that the intensity value or other information may be provided "to the program" it should be recognized that the invention encompasses providing such data to one routine of a process using a procedure call or other software function such that a single process can both perform image processing functionality as well as gaming functionality, as well as separating the functions into different processes whereby one or more processes, which may execute on a common processor core or multiple processor cores, perform image and/or audio processing as described herein and a separate process performs gaming functions.

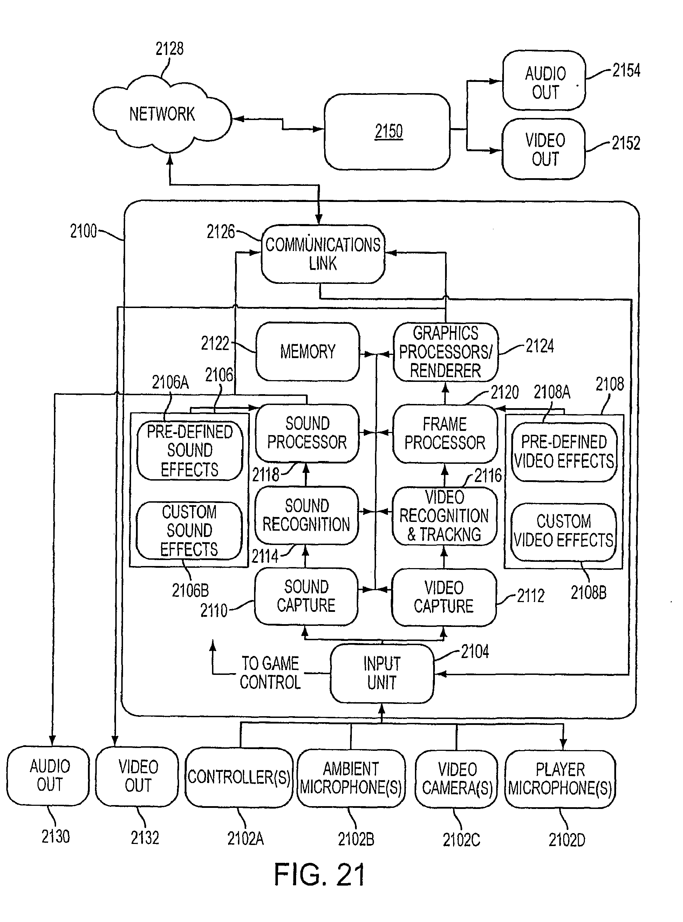

Figure 21 is a simplified block diagram of a high level overview of a system for improving and enhancing verbal and non-verbal communications in accordance with one embodiment of the present invention. As shown in Figure 21, a system 2100 is capable of inputting data from at least one controller 2102A, at least one ambient microphone 2102B, at least one video camera 2102C, and at least one player microphone 2102D.

The video input from the video camera 2102C is initially fed into an input unit 104. The input unit can be in the form of circuitry or a software-controlled driver. The video input may then be passed to a video capture unit 2112 and further processed by a video recognition and tracking unit 2116. The video recognition and tracking unit 2116 can recognize facial features and body parts of a user along with the movements of the user. Additionally, the video recognition and tracking unit 2116 may be capable of capturing the background surroundings, and other elements within the captured images. A frame processor 2120 uses the output from the video recognition and tracking unit 2116 and can augment the image with video from a video effects library 2108. The video effects library 2108 contains at least two libraries shown as a pre-defined video effects 2108A and custom video effects 2108B, which can be selectively applied by the user or automatically applied by the system 2100. It is possible for the video effects library 2108 to contain fewer or more libraries so long as the libraries contain predefined and custom video effects. In operation, the frame processor outputs data to a graphics processor/renderer 2124 that computes and outputs the final images displayed to the user, shown as video out 2132. The graphics processor/renderer 2124 also feeds information regarding the state of the system 2100 to a communications link 2126.

The audio input from the ambient microphones 2102B and the player microphones 2102D may be initially passed through the input unit 2104 and then captured by a sound capture unit 2110 that may pass the captured data to a sound recognition unit 2114. Sound data may then be passed to a sound processor 2118 that can also receive input from a sound effects library 2106. The sound effects library 2106 contains at least two libraries shown as predefined sound effects 2106A and custom sound effects 2106B that can be selectively applied by the user or automatically applied by the system 2100. It is possible for the sound effect library to contain fewer or more libraries so long as it has predefined and custom audio effects. In one embodiment, the sound processor 2118 outputs the final mixed sounds for the system 2100, shown as audio out 2130, and feeds information regarding the state of the system 2100 to a communications link 2126.

In one embodiment, the communications link 2126 connects the system 2100 to a network 2128 that can connect system 2100 with a remote system 2150 that is capable of interfacing with the system 2100 and is operated by a remote user (not shown). Figure 21 shows the system 2100 being connected to a single remote system 2150 via the network 2128, but it should be understood that a plurality of remote systems 2150 and their corresponding users may be connected to system 2100 via the network 2128. The remote system 2150 is capable of understanding the state of the system 2100 based on data received from system 2100. The remote system 2150 combines the information regarding the state of the system 2100 with input from the remote user before producing audio out 2154 and video out 2152.

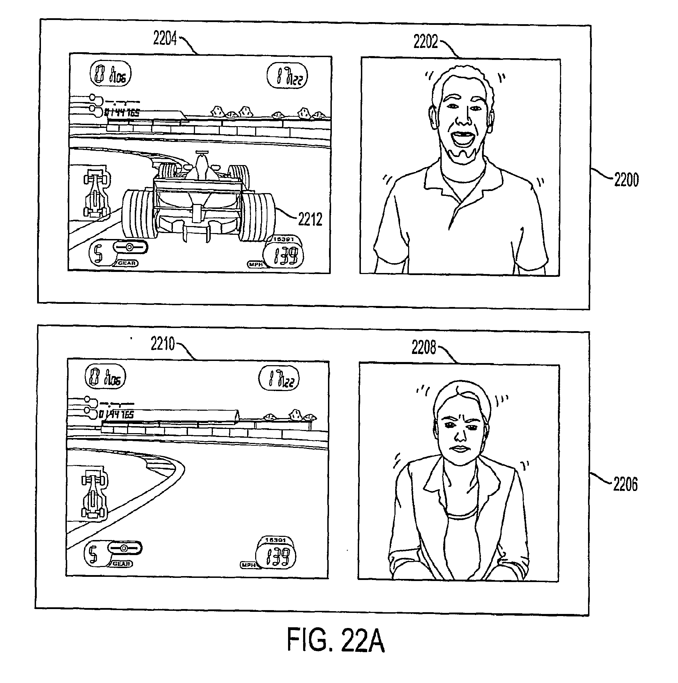

Figure 22A shows the screens from two players as they race against each other in accordance with one embodiment of the present invention. This example, based on a driving simulation game, will provide further insight regarding the current invention. In this example two players are racing against each other using a driving simulation that enables affective characteristics to an avatar during gameplay. Player 1 and player 2 could be in different physical locations and may use the internet to transmit data regarding the game state of each player. Microphones and cameras at the respective locations of each player may monitoring reactions of the players to the gameplay. In one embodiment, the microphones can monitor the audible reaction of a player while the cameras can monitor the physical movements of the players in reaction to the gameplay. In other embodiments, the controllers can be configured to relay data regarding position and rate of change of pitch, roll, yaw, acceleration and relative motion of the controller to the computing system. Each player can have a custom avatar and each player can see the avatar of their opponent on their screen.

In one embodiment a video screen 2200 may contain two windows; window 2204 shows what player 1 sees during the game while window 2202 shows the avatar for player 2. A video screen 2206 also may contain two windows; window 2210 shows what player 2 sees during the game while window 2208 shows the avatar for player 1. In a different embodiment there could be multiple avatar windows to represent more than one online opponent. In another embodiment there may be no separate avatar windows but instead the avatars could be overlaid on the window displaying the game. There are many other possible combination of screens within the video screen 2200 and the examples listed above are not meant to be restrictive.

In this example, as the race starts player 1 does not get a good start- This can be seen in the window 2204 because a car 2212, "driven" by player 2 is visible to player 1. In substantially real time player 2, who has nothing in front of him, as seen in the screen 2210, can see the avatar of player 1, grimace as a result of the real-life grimace of player 1. The real-life grimace of player 1 captured by the camera and the avatar of player 1 modified to mimic the real-life reaction of player 1. Conversely, player 1 can see the avatar of player 2 stick out his tongue in reaction to player 1's poor start. Thus, the avatar for player 1, shown in the window 2208, can be modified to reflect the body motion and grimace of player 1. Similarly, the avatar for player 2, shown in the window 2202 can be modified to reflect the body motion and facial expression of player 2. The extent that facial expression can be modified include, but are not limited to the modification of an eye characteristic, mouth characteristics, eyebrow characteristics or combinations thereof.

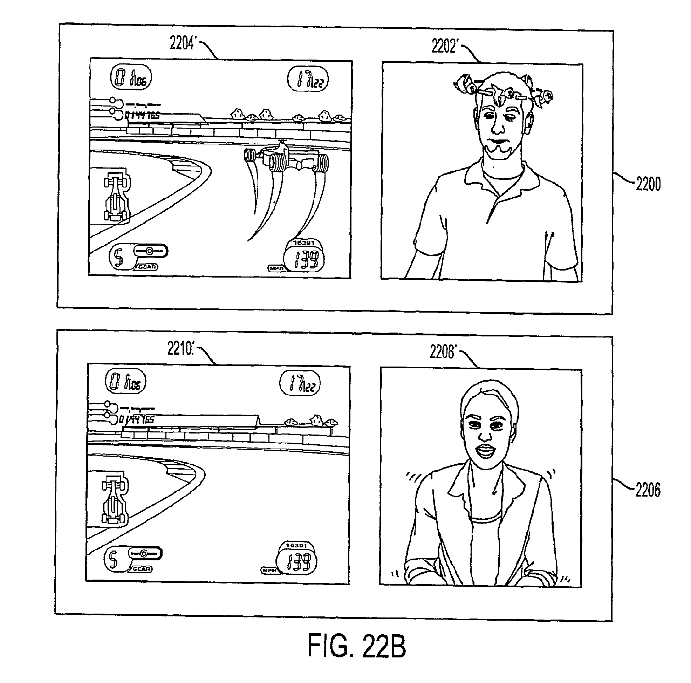

Figure 22B is a continuation of the race and player 2 spins his car as seen from the perspective of player 1 in the window 2204'. In substantially real time player 1 can see the avatar of player 2 spin around and around while the avatar of player 2 is modified based on a representation of player 2's actual facial expression, captured by the camera at player 2's location. As a demonstration of automatically sensing gameplay events, the avatar for player 2 can automatically have cartoon birds flying his head to indicate dizziness after the spinout as shown in the window 2202'. Dizziness is a particular example of an automatically modified avatar and is not intended to be limiting. There are potentially limitless automatic avatar modification including some that are automatically executed in response to actions triggered or commanded by a real-world user. In another embodiment, avatar representations of players are automatically partially modified in response to gameplay events. Note that any automatic modification of a player's avatar does not necessarily fully match the monitored reaction of the real-world user.

The avatar for player 2, as seen in the window 2202', has raised his hand while holding the controller in frustration. The video camera can be used to capture video of a user while various programs and processors can be used to analyze and detect movement of the user within the captured video. The detected movement of the user can be mapped to the avatar representation of the first user and displayed to a second user in substantially real-time. As seen in the window 2208' the avatar for player 1 has widened his eyes as a reaction to seeing player 1 spinout. Note that the modified reactions listed are not intended to be limiting and avatars can be modified to include changes in a real-world users movements, facial reaction or audible reactions. In one embodiment, the camera and associated software can be used to monitor a real-world user for changes in facial expression, head movement, and hand movement and continuously update the avatar representation of the real-world user in substantially real-time.

Audible reactions from a user can be captured using the microphones. A combination of hardware and software can be used to detect statements within the captured audible reactions. The detected statements can then be filtered so that selected statements are communicated between players during gameplay. In one embodiment, the detected and filtered statements can be communicated textually using text bubbles associated with a player's avatar. In another embodiment, the detected and filtered statements are conveyed audibly via speakers associated with a second player's interactive game setup. In yet another embodiment, the detected and filtered statements are communicated audibly and textually. In one embodiment, the detected statements can be filtered to include or exclude particular statements based on a particular game's Entertainment Software Rating Board (ESRB) rating. In other embodiments, parents can configure level of statement filtration.

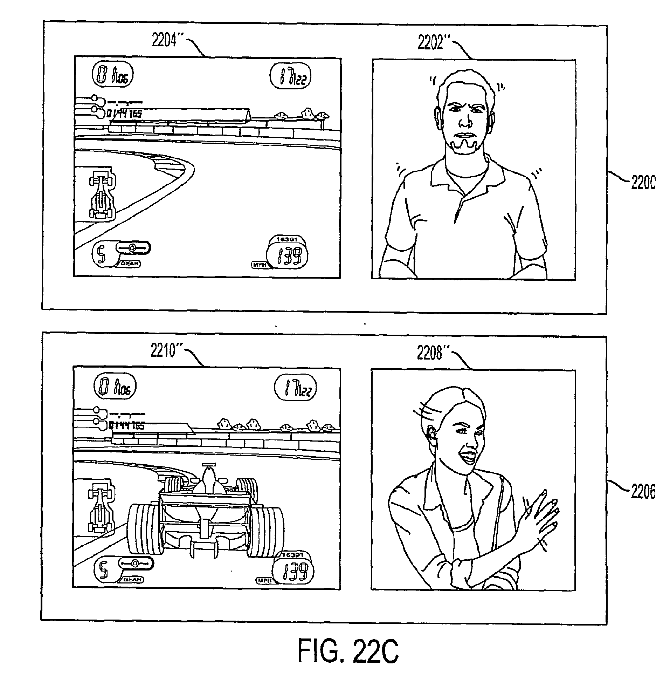

Figure 22C shows another example of affective characteristics on avatars. Player 1 has passed the spun out player 2 as seen in the empty road before player 1 in the window 2204". The window 2202" shows the avatar of player 2 while the window 2208" shows the avatar for player 1 turning its head and waving as an automatic response to having passed player 2. The window 2210" shows the car of player 1 in front of player 2.

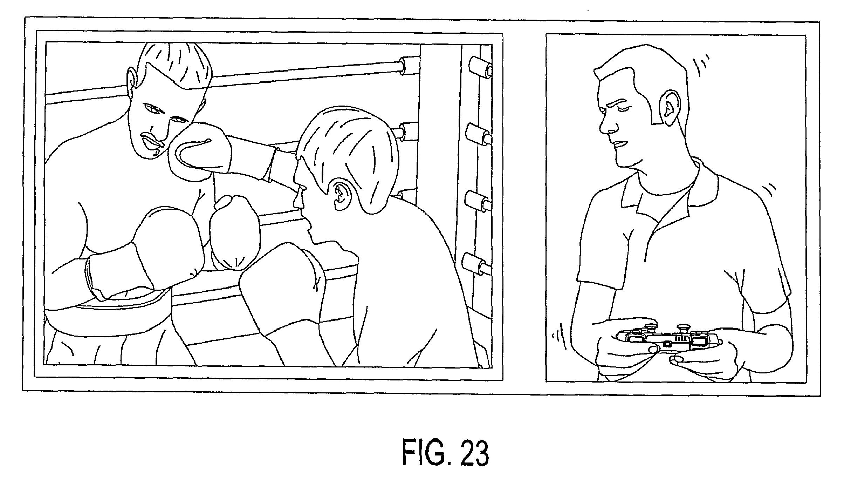

Figure 23 shows the reaction of an opponent in the avatar window during a boxing simulation. In this example the game screen shown is from the perspective of the player delivering the punch because the avatar window shows the grimacing reaction of the player receiving the punch.

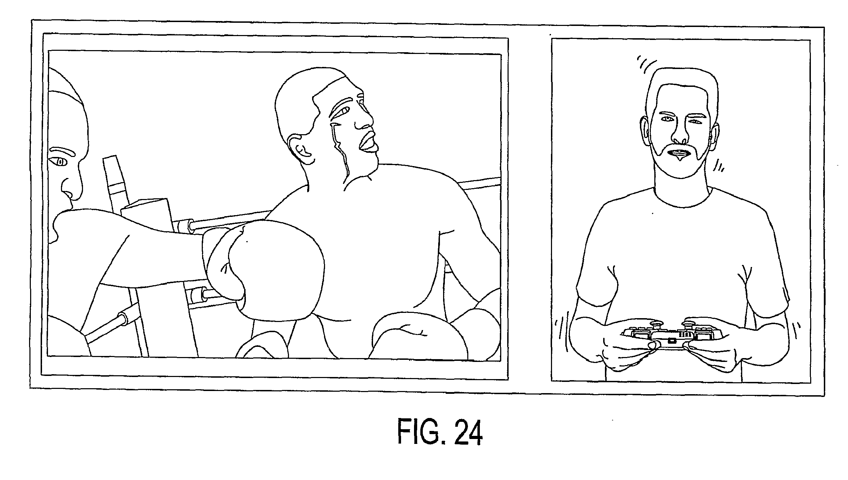

Figure 24 shows the reaction of an opponent in the avatar window during a boxing simulation. In this example the game screen shown is from the perspective of the player receiving the punch because the avatar window shows the menacing reaction of the player delivering the punch.

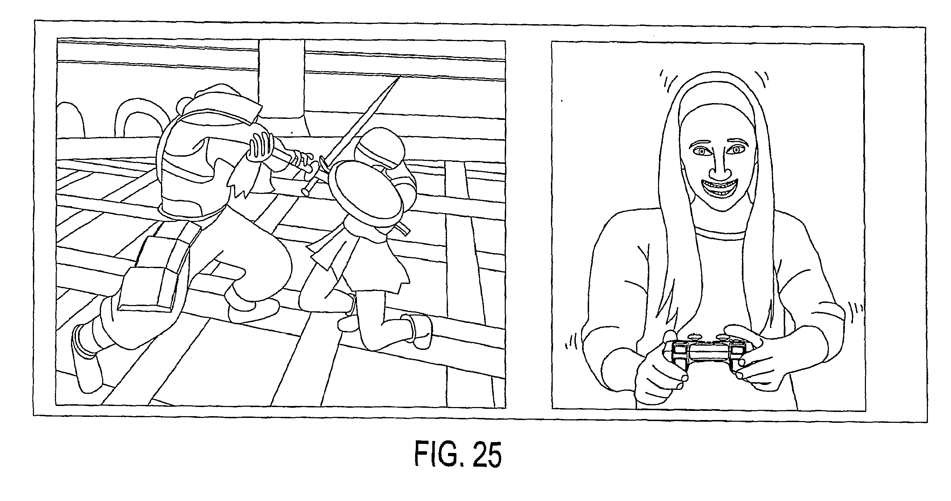

Figure 25 shows the reaction of an team member in the avatar window during a role playing game. In this example the game screen shown is from the perspective of the player watching the treasure chest being opened because the avatar window shows the happy reaction of the player opening the treasure chest.

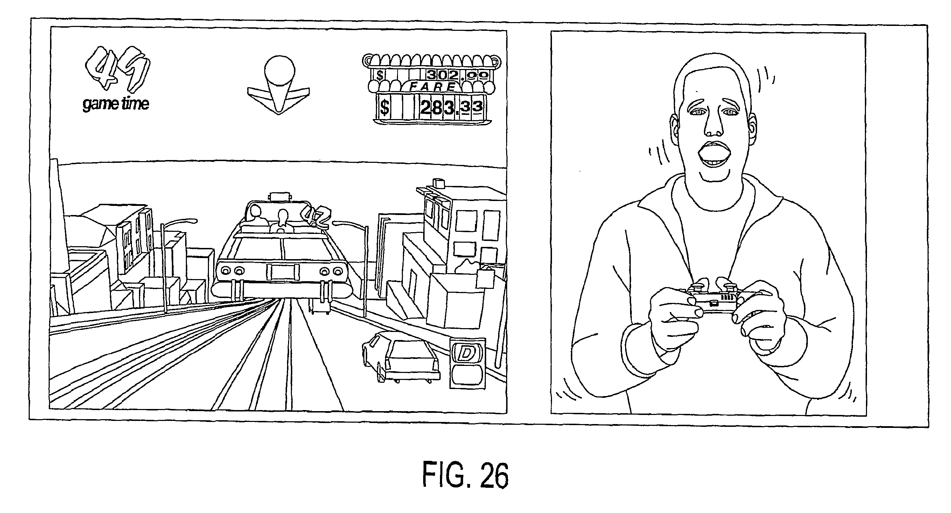

Figure 26 shows the reaction of a player in the avatar window during a driving simulation. In this example the game screen shown is from the perspective of the player in second place and the avatar window reflects the surprised facial expression of the player driving the airborne car visible in the game screen.

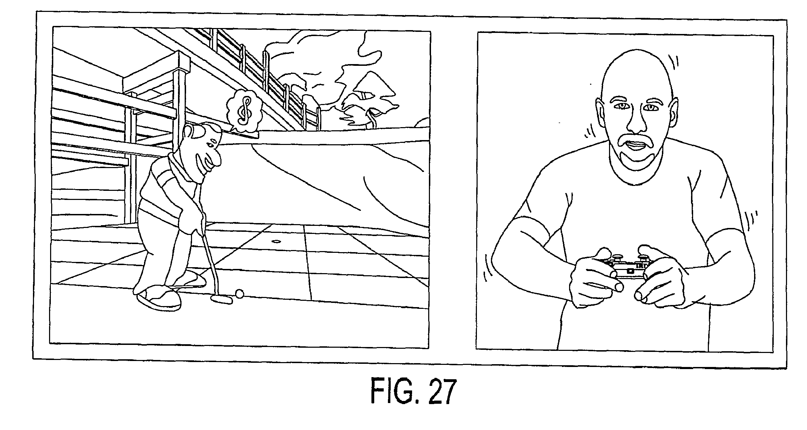

Figure 27 shows the reaction of the an opponent in the avatar window during a golf simulation. In this example the game screen shown is from the perspective of the player putting and the avatar window shows the nervousness of an opponent watching the player putt. The examples listed in Figures 22A-27 are meant to illustrate possible application of affective characteristics to computer generated avatar during gameplay. There are many possible applications and the previous examples are intended to be illustrative and not restrictive.

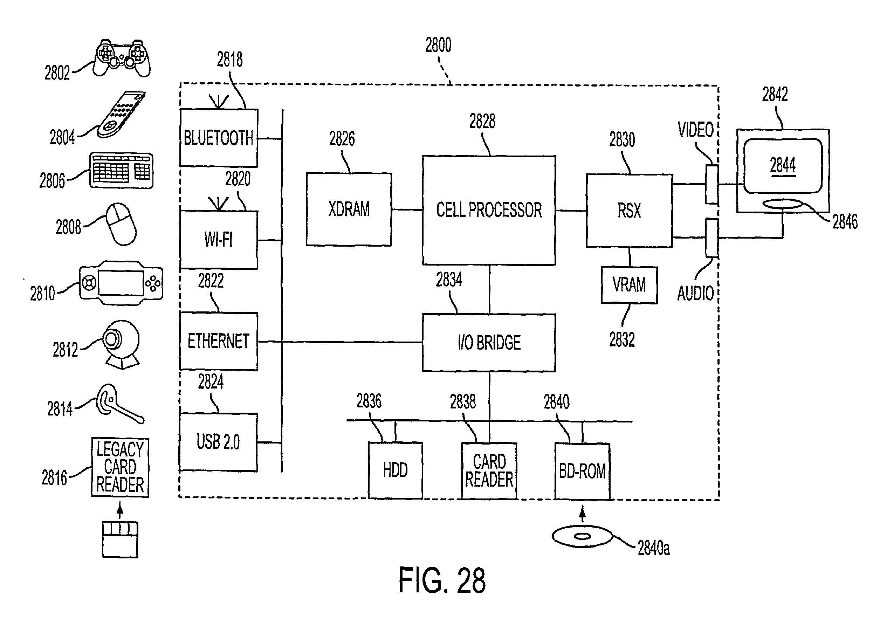

Figure 28 schematically illustrates the overall system architecture of the Sony® Playstation 3® entertainment device, a console that may be compatible with controllers for implementing an avatar control system in accordance with one embodiment of the present invention. A system unit 2800 is provided, with various peripheral devices connectable to the system unit 2800.The system unit 2800 comprises: a Cell processor 2828; a Rambus® dynamic random access memory (XDRAM) unit 2826; a Reality Synthesizer graphics unit 2830 with a dedicated video random access memory (VRAM) unit 2832; and an I/O bridge 2834. The system unit 2800 also comprises a Blu Ray® Disk BD-ROM® optical disk reader 2840 for reading from a disk 2840a and a removable slot-in hard disk drive (HDD) 2836, accessible through the I/O bridge 2834. Optionally the system unit 2800 also comprises a memory card reader 2838 for reading compact flash memory cards, Memory Stick® memory cards and the like, which is similarly accessible through the I/O bridge 2834.

The I/O bridge 2834 also connects to six Universal Serial Bus (USB) 2.0 ports 2824; a gigabit Ethernet port 2822; an IEEE 802.11b/g wireless network (Wi-Fi) port 2820; and a Bluetooth® wireless link port 2818 capable of supporting of up to seven Bluetooth connections.

In operation the I/O bridge 2834 handles all wireless, USB and Ethernet data, including data from one or more game controllers 2802. For example when a user is playing a game, the I/O bridge 2834 receives data from the game controller 2802 via a Bluetooth link and directs it to the Cell processor 2828, which updates the current state of the game accordingly.

The wireless, USB and Ethernet ports also provide connectivity for other peripheral devices in addition to game controllers 2802, such as: a remote control 2804; a keyboard 2806; a mouse 2808; a portable entertainment device 2810 such as a Sony Playstation Portable® entertainment device; a video camera such as an EyeToy® video camera 2812; and a microphone headset 2814. Such peripheral devices may therefore in principle be connected to the system unit 2800 wirelessly; for example the portable entertainment device 2810 may communicate via a Wi-Fi ad-hoc connection, whilst the microphone headset 2814 may communicate via a Bluetooth link.

The provision of these interfaces means that the Playstation 3 device is also potentially compatible with other peripheral devices such as digital video recorders (DVRs), set-top boxes, digital cameras, portable media players, Voice over IP telephones, mobile telephones, printers and scanners.

In addition, a legacy memory card reader 2816 may be connected to the system unit via a USB port 2824, enabling the reading of memory cards 2848 of the kind used by the Playstation® or Playstation 2® devices.

In the present embodiment, the game controller 2802 is operable to communicate wirelessly with the system unit 2800 via the Bluetooth link. However, the game controller 2802 can instead be connected to a USB port, thereby also providing power by which to charge the battery of the game controller 2802. In addition to one or more analog joysticks and conventional control buttons, the game controller is sensitive to motion in six degrees of freedom, corresponding to translation and rotation in each axis. Consequently gestures and movements by the user of the game controller may be translated as inputs to a game in addition to or instead of conventional button or joystick commands. Optionally, other wirelessly enabled peripheral devices such as the PlaystationTM Portable device may be used as a controller. In the case of the PlaystationTM Portable device, additional game or control information (for example, control instructions or number of lives) may be provided on the screen of the device. Other alternative or supplementary control devices may also be used, such as a dance mat (not shown), a light gun (not shown), a steering wheel and pedals (not shown) or bespoke controllers, such as a single or several large buttons for a rapid-response quiz game (also not shown).

The remote control 2804 is also operable to communicate wirelessly with the system unit 2800 via a Bluetooth link. The remote control 2804 comprises controls suitable for the operation of the Blu RayTM Disk BD-ROM reader 2840 and for the navigation of disk content.

The Blu RayTM Disk BD-ROM reader 2840 is operable to read CD-ROMs compatible with the Playstation and PlayStation 2 devices, in addition to conventional pre-recorded and recordable CDs, and so-called Super Audio CDs. The reader 2840 is also operable to read DVD-ROMs compatible with the Playstation 2 and PlayStation 3 devices, in addition to conventional pre-recorded and recordable DVDs. The reader 2840 is further operable to read BD-ROMs compatible with the Playstation 3 device, as well as conventional pre-recorded and recordable Blu-Ray Disks.

The system unit 2800 is operable to supply audio and video, either generated or decoded by the Playstation 3 device via the Reality Synthesizer graphics unit 2830, through audio and video connectors to a display and sound output device 2842 such as a monitor or television set having a display 2844 and one or more loudspeakers 2846. The audio connectors 2850 may include conventional analogue and digital outputs whilst the video connectors 2852 may variously include component video, S-video, composite video and one or more High Definition Multimedia Interface (HDMI) outputs. Consequently, video output may be in formats such as PAL or NTSC, or in 720p, 1080i or 1080p high definition.

Audio processing (generation, decoding and so on) is performed by the Cell processor 1128. The Playstation 3 device's operating system supports Dolby® 5.1 surround sound, Dolby® Theatre Surround (DTS), and the decoding of 7.1 surround sound from Blu-Ray® disks.

In the present embodiment, the video camera 2812 comprises a single charge coupled device (CCD), an LED indicator, and hardware-based real-time data compression and encoding apparatus so that compressed video data may be transmitted in an appropriate format such as an intra-image based MPEG (motion picture expert group) standard for decoding by the system unit 2800. The camera LED indicator is arranged to illuminate in response to appropriate control data from the system unit 2800, for example to signify adverse lighting conditions. Embodiments of the video camera 2812 may variously connect to the system unit 2800 via a USB, Bluetooth or Wi-Fi communication port. Embodiments of the video camera may include one or more associated microphones and also be capable of transmitting audio data. In embodiments of the video camera, the CCD may have a resolution suitable for high-definition video capture. In use, images captured by the video camera may for example be incorporated within a game or interpreted as game control inputs.

In general, in order for successful data communication to occur with a peripheral device such as a video camera or remote control via one of the communication ports of the system unit 2800, an appropriate piece of software such as a device driver should be provided. Device driver technology is well-known and will not be described in detail here, except to say that the skilled man will be aware that a device driver or similar software interface may be required in the present embodiment described.

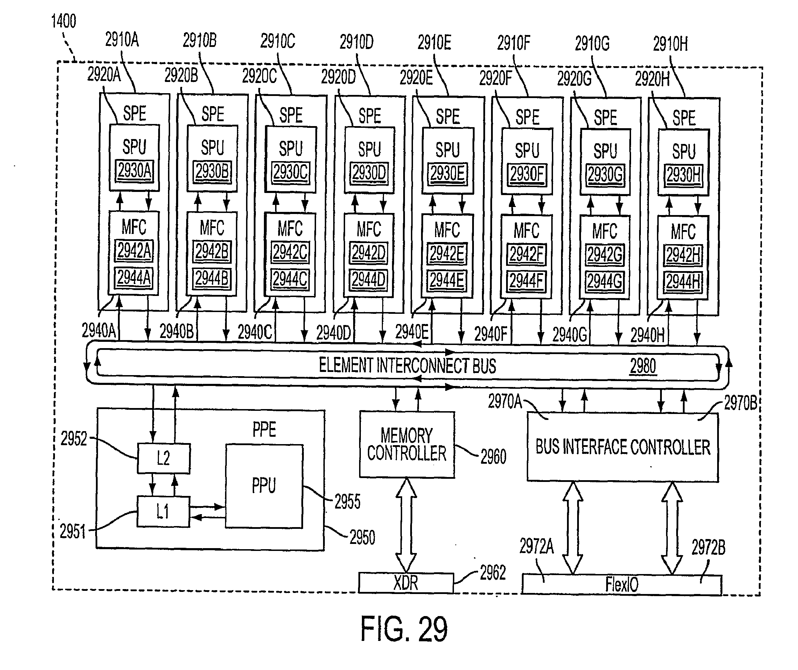

Referring now to Figure 29, the Cell processor 2828 has an architecture comprising four basic components: external input and output structures comprising a memory controller 2960 and a dual bus interface controller 2970A,B; a main processor referred to as the Power Processing Element 2950; eight co-processors referred to as Synergistic Processing Elements (SPEs) 2910A-H; and a circular data bus connecting the above components referred to as the Element Interconnect Bus 2980. The total floating point performance of the Cell processor is 218 GFLOPS, compared with the 6.2 GFLOPs of the Playstation 2 device's Emotion Engine.

The Power Processing Element (PPE) 2950 is based upon a two-way simultaneous multithreading Power 970 compliant PowerPC core (PPU) 2955 running with an internal clock of 3.2 GHz. It comprises a 512 kB level 2 (L2) cache and a 32 kB level 1 (L1) cache. The PPE 2950 is capable of eight single position operations per clock cycle, translating to 25.6 GFLOPs at 3.2 GHz. The primary role of the PPE 2950 is to act as a controller for the Synergistic Processing Elements 2910A-H, which handle most of the computational workload. In operation the PPE 2950 maintains a job queue, scheduling jobs for the Synergistic Processing Elements 2910A-H and monitoring their progress. Consequently each Synergistic Processing Element 2910A-H runs a kernel whose role is to fetch a job, execute it and synchronized with the PPE 2950.

Each Synergistic Processing Element (SPE) 2910A-H comprises a respective Synergistic Processing Unit (SPU) 2920A-H, and a respective Memory Flow Controller (MFC) 2940A-H comprising in turn a respective Dynamic Memory Access Controller (DMAC) 2942A-H, a respective Memory Management Unit (MMU) 2944A-H and a bus interface (not shown). Each SPU 2920A-H is a RISC processor clocked at 3.2 GHz and comprising 256 kB local RAM 2930A-H, expandable in principle to 4 GB. Each SPE gives a theoretical 25.6 GFLOPS of single precision performance. An SPU can operate on 4 single precision floating point members, 4 32-bit numbers, 8 16-bit integers, or 16 8-bit integers in a single clock cycle. In the same clock cycle it can also perform a memory operation. The SPU 2920A-H does not directly access the system memory XDRAM 2826; the 64-bit addresses formed by the SPU 2920A-H are passed to the MFC 2940A-H which instructs its DMA controller 2942A-H to access memory via the Element Interconnect Bus 2980 and the memory controller 2960.

The Element Interconnect Bus (EIB) 2980 is a logically circular communication bus internal to the Cell processor 2828 which connects the above processor elements, namely the PPE 2950, the memory controller 2960, the dual bus interface 2970A,B and the 8 SPEs 1210A-H, totaling 12 participants. Participants can simultaneously read and write to the bus at a rate of 8 bytes per clock cycle. As noted previously, each SPE 2910A-H comprises a DMAC 2942A-H for scheduling longer read or write sequences. The EIB comprises four channels, two each in clockwise and anti-clockwise directions. Consequently for twelve participants, the longest step-wise data-flow between any two participants is six steps in the appropriate direction. The theoretical peak instantaneous EIB bandwidth for 12 slots is therefore 96B per clock, in the event of full utilization through arbitration between participants. This equates to a theoretical peak bandwidth of 307.2 GB/s (gigabytes per second) at a clock rate of 3.2GHz.

The memory controller 2960 comprises an XDRAM interface 2962, developed by Rambus Incorporated. The memory controller interfaces with the Rambus XDRAM 2826 with a theoretical peak bandwidth of 25.6 GB/s.

The dual bus interface 2970A,B comprises a Rambus FlexIO® system interface 2972A,B. The interface is organized into 12 channels each being 8 bits wide, with five paths being inbound and seven outbound. This provides a theoretical peak bandwidth of 62.4 GB/s (36.4 GB/s outbound, 26 GB/s inbound) between the Cell processor and the I/O Bridge 2834 via controller 2972A and the Reality Simulator graphics unit 2830 via controller 2972B.

Data sent by the Cell processor 2828 to the Reality Simulator graphics unit 2830 will typically comprise display lists, being a sequence of commands to draw vertices, apply textures to polygons, specify lighting conditions, and so on.

Embodiments may include capturing depth data to better identify the real-world user and to direct activity of an avatar or scene. The object can be something the person is holding or can also be the person's hand. In the this description, the terms "depth camera" and "three-dimensional camera" refer to any camera that is capable of obtaining distance or depth information as well as two-dimensional pixel information. For example, a depth camera can utilize controlled infrared lighting to obtain distance information. Another exemplary depth camera can be a stereo camera pair, which triangulates distance information using two standard cameras. Similarly, the term "depth sensing device" refers to any type of device that is capable of obtaining distance information as well as two-dimensional pixel information.

Recent advances in three-dimensional imagery have opened the door for increased possibilities in real-time interactive computer animation. In particular, new "depth cameras" provide the ability to capture and map the third-dimension in addition to normal two-dimensional video imagery. With the new depth data, embodiments of the present invention allow the placement of computer-generated objects in various positions within a video scene in real-time, including behind other objects.

Moreover, embodiments of the present invention provide real-time interactive gaming experiences for users. For example, users can interact with various computer-generated objects in real-time. Furthermore, video scenes can be altered in real-time to enhance the user's game experience. For example, computer generated costumes can be inserted over the user's clothing, and computer generated light sources can be utilized to project virtual shadows within a video scene. Hence, using the embodiments of the present invention and a depth camera, users can experience an interactive game environment within their own living room. Similar to normal cameras, a depth camera captures two-dimensional data for a plurality of pixels that comprise the video image. These values are color values for the pixels, generally red, green, and blue (RGB) values for each pixel. In this manner, objects captured by the camera appear as two-dimension objects on a monitor.

Embodiments of the present invention also contemplate distributed image processing configurations. For example, the invention is not limited to the captured image and display image processing taking place in one or even two locations, such as in the CPU or in the CPU and one other element. For example, the input image processing can just as readily take place in an associated CPU, processor or device that can perform processing; essentially all of image processing can be distributed throughout the interconnected system. Thus, the present invention is not limited to any specific image processing hardware circuitry and/or software. The embodiments described herein are also not limited to any specific combination of general hardware circuitry and/or software, nor to any particular source for the instructions executed by processing components.

With the above embodiments in mind, it should be understood that the invention may employ various computer-implemented operations involving data stored in computer systems.
These operations include operations requiring physical manipulation of physical quantities. Usually, though not necessarily, these quantities take the form of electrical or magnetic signals capable of being stored, transferred, combined, compared, and otherwise manipulated.
Further, the manipulations performed are often referred to in terms, such as producing, identifying, determining, or comparing.

The present invention may be used as presented herein or in combination with other user input mechansims and notwithstanding mechanisms that track the angular direction of the sound and/or mechansims that track the position of the object actively or passively, mechanisms using machine vision, combinations thereof and where the object tracked may include ancillary controls or buttons that manipulate feedback to the system and where such feedback may include but is not limited light emission from light sources, sound distortion means, or other suitable transmitters and modulators as well as buttons, pressure pad, etc. that may influence the transmission or modulation of the same, encode state, and/or transmit commands from or to the device being tracked.

The invention may be practiced with other computer system configurations including game consoles, gaming computers or computing devices, hand-held devices, microprocessor systems, microprocessor-based or programmable consumer electronics, minicomputers, mainframe computers and the like. The invention may also be practiced in distributing computing environments where tasks are performed by remote processing devices that are linked through a network, For instance, on-line gaming systems and software may also be used.

With the above embodiments in mind, it should be understood that the invention may employ various computer-implemented operations involving data stored in computer systems. These operations are those requiring physical manipulation of physical quantities. Usually, though not necessarily, these quantities take the form of electrical or magnetic signals capable of being stored, transferred, combined, compared, and otherwise manipulated. Further, the manipulations performed are often referred to in terms, such as producing, identifying, determining, or comparing.

Any of the operations described herein that form part of the invention are useful machine operations. The invention also relates to a device or an apparatus for performing these operations. The apparatus may be specially constructed for the required purposes, such as the carrier network discussed above, or it may be a general purpose computer selectively activated or configured by a computer program stored in the computer. In particular, various general purpose machines may be used with computer programs written in accordance with the teachings herein, or it may be more convenient to construct a more specialized apparatus to perform the required operations.

The invention can also be embodied as computer readable code on a computer readable medium. The computer readable medium may be any data storage device that can store data, which can thereafter be read by a computer system. Examples of the computer readable medium include hard drives, network attached storage (NAS), read-only memory, random-access memory, FLASH based memory, CD-ROMs, CD-Rs, CD-RWs, DVDs, magnetic tapes, and other optical and non-optical data storage devices. The computer readable medium can also be distributed over a network coupled computer systems so that the computer readable code may be stored and executed in a distributed fashion.

Although the foregoing invention has been described in some detail for the purposes of clarity of understanding, it will be apparent that certain changes and modifications may be practised within the scope of the appended claims. Accordingly, the preferred embodiments are not to be considered as illustrative and not restrictive, and the invention is not to be limited to the details given herein, but may be modified within the scope and equivalents of the appended claims.

Preferred embodiments of the invention are defined in the following numbered paragraphs.
1. A computer implemented method for modifying an avatar in response to user reaction to gameplay events, the avatar representing either or both of a first user and a second user, the gameplay events resulting from execution of a computer program and user input to a computer system executing at least part of the computer program, comprising: executing game play; monitoring reactions of one or both of the first and second users; displaying an avatar representation of one or both of the first and second users along side of a game play display area; and modifying reactions of the avatar representation of one or both of the first and second users in response to the monitored reactions of the first and second users during the execution of game play.
2. The computer implemented method as recited in paragraph 1, wherein the avatar representation identifies at least one of movement, facial reactions, or audible reactions of either on or both of the first and second users through the displayed avatar representation.
3. The computer implemented method as recited in paragraph 1, wherein the game play is executed on-line, such that computer systems of each of the first and second users interact with the computer program that is executed partially on the respective computer systems of the first and second users and on a network computer connected over an Internet connection.
4. The computer implemented method as recited in paragraph 1, wherein the monitoring of reactions of one or both of the first and second users includes, capturing video of the first user; detecting movements of the first user; mapping the detected movements of the first user to the avatar representation of the first user; and displaying the avatar representation on a display screen connected the computing system of either the first or second user.
5. The computer implemented method as recited in paragraph 1, wherein the monitoring of reactions of one or both of the first and second users includes, capturing audio of the first user and the second user; detecting statements made from the captured audio; and filtering the detected statements so that one selected ones of the statements are communicating between the first and second users during gameplay.
6. The computer implemented method as recited in paragraph 1, wherein modifying reactions of the avatar representation includes, displaying one of facial reactions, head movement and hands movements, the displaying occurring along side of a display area of the game play; and continuously updating the avatar representation in substantially real-time, so as to communicate gameplay reaction between the first and second user.
7. A computer implemented method for modifying an avatar in response to user reaction to gameplay events, the avatar representing either or both of a first user and a second user, the gameplay events resulting from execution of a computer program and user input to a computer system executing at least part of the computer program, comprising: executing game play; monitoring reactions of one or both of the first and second users; displaying an avatar representation of one or both of the first and second users along side of a game play display area; and modifying reactions of the avatar representation of one or both of the first and second users in response to the monitored reactions of the first and second users during the execution of game play, and the avatar representation being at least partially modified automatically in response to gameplay events, and when modified automatically, the modification of the avatar representation does not fully match the monitored reaction of the first or second user.
8. A computer implemented method as recited in paragraph 7, wherein the avatar representation identifies at least one of movement, facial reactions, or audible reactions of either on or both of the first and second users through the displayed avatar representation.
9. The computer implemented method as recited in paragraph 7, wherein the gameplay is executed on-line, such that computer systems of each of the first and second users interact with the computer program that is executed partially on the respective computer systems of the first and second users and on a network computer connected over an Internet connection.
10. The computer implemented method as recited in paragraph 7, wherein the monitoring of reactions of one or both of the first and second users includes, capturing video of either the first or second user; detecting movements of the first or second user; mapping the detected movements of the first or second user to the avatar representations of the first or second user; and displaying the avatar representations on a display screen connected the computing system of either the first or second user.
11. The computer implemented method as recited in paragraph 7, wherein the monitoring of reactions of one or both of the first and second users includes, capturing audio of the first user and the second user; detecting statements made from the captured audio; and filtering the detected statements so that one selected ones of the statements are communicating between the first and second users during gameplay.
12. The computer implemented method as recited in paragraph 7, wherein modifying reactions of the avatar representation includes, displaying one of facial reactions, head movement and hands movements, the displaying occurring along side of a display area of the game play; and continuously updating the avatar representation in substantially real-time, so as to communicate gameplay reaction between the first and second user.
13. A computer implemented method for automatically modifying an avatar in response to gameplay events, the avatar representing a first user, the gameplay events resulting from execution of a computer program and user input to a computer system executing at least part of the computer program, comprising: monitoring gameplay events to identify actions occurring during gameplay; modifying a graphical image of the avatar representing the first user in response to identified actions occurring during gameplay to visually convey a response to the gameplay actions; and displaying to a second user the modified graphical image of the avatar representing the first user, wherein the modified avatar representing the first user allows the second user to understand gameplay actions that have occurred to the first user.
14. The computer implemented method for automatically modifying an avatar in response to gameplay events as recited in paragraph 13, wherein actions occurring during game play include computer defined actions and actions triggered or commanded by either the first or second user.
15. The computer implemented method for automatically modifying an avatar in response to gameplay events as recited in paragraph 13, wherein the graphical image of the avatar includes a display of at least a face of the avatar.
16. The computer implemented method for automatically modifying an avatar in response to gameplay events as recited in paragraph 15, wherein to convey the response to the gameplay actions includes modifying the face of the avatar to display changes in one of eye characteristics, mouth characteristics, eyebrow characteristics, or combinations thereof.
17. The computer implemented method for automatically modifying an avatar in response to gameplay events as recited in paragraph 13, further comprising: monitoring reactions of one or both of the first and second users; displaying the graphical image of the avatar of the first user or the second user; and modifying reactions of the avatar of one or both of the first and second users in response to the monitored reactions of the first and second users during the execution of gameplay, wherein the modifying reactions of the avatar based on the monitored reactions of either the first or second user is in addition to the automatic modifying based on gameplay events.
18. The computer implemented method for automatically modifying an avatar in response to gameplay events as recited in paragraph 13, wherein the gameplay is executed on-line, such that computer systems of each of the first and second users interact with the computer program that is executed partially on the respective computer systems of the first and second users and on a network computer connected over an Internet connection.
19. Computer readable media having program instructions for modifying an avatar in response to user reaction to gameplay events, the avatar representing either or both of a first user and a second user, the gameplay events resulting from execution of a computer program and user input to a computer system executing at least part of the computer program, the media comprising: program instructions for executing game play; program instructions for monitoring reactions of one or both of the first and second users; program instructions for displaying an avatar representation of one or both of the first and second users along side of a game play display area; and program instructions for modifying reactions of the avatar representation of one or both of the first and second users in response to the monitored reactions of the first and second users during the execution of game play.
20. The computer readable media of paragraph 1, wherein the avatar representation identifies at least one of movement, facial reactions, or audible reactions of either on or both of the first and second users through the displayed avatar representation.

## Claims

1. A computer implemented method for automatically modifying an avatar in response to gameplay events, the avatar representing a first user, the gameplay events resulting from execution of a computer program and user input to a computer system executing at least part of the computer program, the method comprising:
monitoring gameplay events to identify actions occurring during gameplay;
modifying a graphical image of the avatar representing the first user in response to identified actions occurring during gameplay to visually convey a response to the gameplay actions; and
displaying to a second user the modified graphical image of the avatar representing the first user;
wherein the modified avatar representing the first user allows the second user to understand gameplay actions that have occurred to the first user.

2. The computer implemented method for automatically modifying an avatar in response to gameplay events as recited in claim 1, wherein actions occurring during game play include computer defined actions and actions triggered or commanded by either the first or second user.

3. The computer implemented method for automatically modifying an avatar in response to gameplay events as recited in claim 1, wherein the graphical image of the avatar includes a display of at least a face of the avatar.

4. The computer implemented method for automatically modifying an avatar in response to gameplay events as recited in claim 3, wherein to convey the response to the gameplay actions includes modifying the face of the avatar to display changes in one of eye characteristics, mouth characteristics, eyebrow characteristics, or combinations thereof.

5. The computer implemented method for automatically modifying an avatar in response to gameplay events as recited in claim 1, further comprising:
monitoring reactions of one or both of the first and second users;
displaying the graphical image of the avatar of the first user or the second user; and
modifying reactions of the avatar of one or both of the first and second users in response to the monitored reactions of the first and second users during the execution of gameplay;
wherein the modifying reactions of the avatar based on the monitored reactions of either the first or second user is in addition to the automatic modifying based on gameplay events.

6. The computer implemented method for automatically modifying an avatar in response to gameplay events as recited in claim 1, wherein the gameplay is executed on-line, such that computer systems of each of the first and second users interact with the computer program that is executed partially on the respective computer systems of the first and second users and on a network computer connected over an Internet connection.

7. Computer software for carrying out a method according to any one of the preceding claims.

8. A computer system for automatically modifying an avatar in response to gameplay events, the avatar representing a first user, the gameplay events resulting from execution of a computer program by the computer system and from user input to the computer system, the system comprising:
means for monitoring gameplay events to identify actions occurring during gameplay;
means for modifying a graphical image of the avatar representing the first user in response to identified actions occurring during gameplay to visually convey a response to the gameplay actions; and
means for displaying to a second user the modified graphical image of the avatar representing the first user;
wherein the modified avatar representing the first user allows the second user to understand gameplay actions that have occurred to the first user.

9. A computer system according to claim 8, in which the computing system is a single system common to the first and second users and operating in a multiplayer mode.

10. A computing system according to claim 8, in which the computing system comprises a respective computer for each user and a network computer, the users' computers and the network computer being connected to one another via an Internet connection so that the gameplay is executed on-line, such that the computers of each of the first and second users interact with the computer program that is executed partially on the respective computers of the first and second users and on the network computer.

11. A computing system according to claim 8, wherein actions occurring during game play include computer defined actions and actions triggered or commanded by either the first or second user.

12. A computing system according to claim 8, in which the graphical image of the avatar includes a display of at least a face of the avatar.

13. A computing system according to claim 12, wherein to convey the response to the gameplay actions includes modifying the face of the avatar to display changes in one of eye characteristics, mouth characteristics, eyebrow characteristics, or combinations thereof.

14. A computing system according to claim 8, further comprising:
means for monitoring reactions of one or both of the first and second users;
means for displaying the graphical image of the avatar of the first user or the second user; and
means for modifying reactions of the avatar of one or both of the first and second users in response to the monitored reactions of the first and second users during the execution of gameplay;
wherein the means for modifying reactions of the avatar based on the monitored reactions of either the first or second user operates in addition to the automatic modifying based on gameplay events.
